# EUROPÄISCHE PATENTSCHRIFT

(11) **EP 0 945 248 B1**
(45) Veröffentlichungstag und Bekanntmachung des Hinweises auf die Patenterteilung: **20.11.2002**
(21) Anmeldenummer: 99103441.4
(22) Anmeldetag: 23.02.1999
(51) Int. Cl.: B29D 30/06, B29C 33/42, B60C 11/12, B60C 11/13

(54) **Hochstabile Lamelle, Vulkanisationsform mit solchen Lamellen, Fahrzeugreifen mit Lauffläche, in die Einschnitte mittels solcher Lamellen gebracht sind**
Highly stable blade, vulcanization mould with such blades , vehicle tyre with tread comprising sipes obtained with such blades
Lamelle hautement stable, moule de vulcanisation pourvu de telles lamelles,bandage pneumatique de véhicule muni d'un profil incluant des incisions obtenues au moyen de telles lamelles

(30) Priorität: 24.03.1998 DE 19812778
(43) Veröffentlichungstag der Anmeldung: 29.09.1999
(73) Patentinhaber: Continental Aktiengesellschaft, 30165 Hannover (DE)
(72) Erfinder: Beckmann, Otto Dr., 30169 Hannover (DE); Kleinhoff, Klaus, 31552 Rodenberg (DE)

(56) Entgegenhaltungen:
- EP-A- 0 564 435
- WO-A-99/48707
- GB-A- 1 150 295
- US-A- 5 350 001
- US-A- 5 783 002

## Beschreibung

Die Erfindung bezieht sich auf
- eine Lamelle gemäß dem Oberbegriff des Anspruches 1 oder 2,
- gemäß Anspruch 13 auf eine Vulkanisationsform mit Lamellen gemäß dem Oberbegriff von Anspruch 1 oder 2 und
- gemäß Anspruch 14 auf einen Fahrzeugreifen mit einer Lauffläche mit Einschnitten darin, wobei diese Einschnitte mittels Lamellen gemäß dem Oberbegriff des Anspruches 1 oder 2 geformt sind.

Die erfindungsgemäße Lamelle ist in an sich bekannter Weise zum Einsatz in eine Vulkanisationsform 2 gedacht, wobei diese Vulkanisationsform 2 zur Herstellung eines Fahrzeugreifens 3 bestimmt ist. Erfindungsgemäße Lamellen werden im Bereich der abzuformenden Lauffläche des herzustellenden Reifens angeordnet, um in dieser Lauffläche Einschnitte zu erzeugen, deren Gestalt - vom minimalen, gleichmäßigen Schrumpf abgesehen - das Negativ zur Lamellengestalt ist.

Obwohl der größte wirtschaftliche Wert der Erfindung in erfindungsgemäßen Reifen mit den neuartig gestalteten Einschnitten liegt, wird in dieser Anmeldung zuerst die erfindungsgemäße Lamelle beansprucht und beschrieben, weil anhand derer die komplizierte räumliche Form der Erfindung leichter darstellbar ist als an den Einschnitten in der Reifenlauffläche.

Zumal die Kautschukmischung der Lauffläche beim Einprägen der Einschnitte mittels Lamellen noch plastisch ist und der Schrumpf des Gummis beim Abkühlen von der Vulkanisationstemperatur auf die Reifenbetriebstemperatur gering ist und nahezu gleichmäßig in allen drei Raumrichtungen, stimmen die Gestalt eines Einschnittes im wesentlichen, ja nahezu exakt, mit der Gestalt der diesen Einschnitt erzeugt habenden Lamelle überein. Der Einschnitt und die den Einschnitt erzeugende Lamelle verhalten sich (abgesehen vom minimalen Schrumpf) wie Positiv und Negativ zueinander; ihre Kanten sind also inverskongruent, das heißt, dass jeder Körperkante der Lamelle mit einer Vorwölbung entgegen einer Blickrichtung eine gleichlaufende Negativkante (= Leerraumkante = void area edge) mit der gleichen Vorwölbung entgegen der gleichen Blickrichtung entspricht und jeder Körperkante der Lamelle mit einer Wölbung nach hinten, also in die Blickrichtung, eine gleichlaufende Negativkante mit der gleichen Wölbung nach hinten, also in die gleiche Blickrichtung, entspricht. Also ist mit Offenbarung der Lamellenform auch die Form der Einschnitte im Reifen beschrieben.

Es ist bekannt, dass solche Einschnitte in Reifenlaufflächen der Aufweichung derselben und der Kantenbildung dienen, um so die Griffigkeit auf schmierigen Untergründen zu verbessern; solche Einschnitte werden deshalb besonders zahlreich für Winterreifen verwendet.

Es ist ferner bekannt, dass der Grad der Aufweichung etwa in der dritten Potenz von der Einschnitt-Tiefe abhängt; dies induziert bei glatter Einschnitt-Ausbildung das Problem, dass die eingeschnittene Lauffläche im Neuzustande des Reifens, wo etwa noch eine Einschnitt-Tiefe gleich der Profilrillentiefe vorliegt, unnötig weich ist und unnötig starke Kantenbildung zeigt mit Nachteilen im Trockenhandling **[bzw.] und** im Abrieb.

Zwar beseitigt eine verringerte Einschnitt-Tiefe diese Nachteile, erzeugt aber den anderen Nachteil, dass nach Abrieb einer der reduzierten Einschnitt-Tiefe entsprechenden Profil-Tiefe keine Einschnitte mehr zur Verfügung stehen; damit verlöre der Reifen seine Griffigkeit auf Matsch.

Als bessere Lösung ist es ferner bekannt, bei voller Einschnitt-Tiefe die Wirksamkeit der tief gelegenen Bereiche der Einschnitte dadurch stark zu begrenzen, dass die Einschnitte so gewellt oder ausgebeult werden, dass ein Formschluss zwischen den dicht beieinander liegenden Wandungen des selben Einschnittes entsteht. So sind dann nur noch kleine radial äußere Bereiche der Einschnitte wirksam, wobei diese wirksamen Bereiche mit zunehmenden Abrieb nach radial innen mitwachsen, sodass der Erweichungseffekt - bis zur Fortpflanzung des wirksamen Verformungsgrundes bis hin zum tatsächlichen Einschnittgrund - weniger schwankt.

Übliche Einschnitt-Dicken liegen bei PKW-Reifen zwischen 0,4 und 1,0 mm, besonders häufig bei PKW-Reifen bei ca. 0,6 mm. PKW-Reifen sind der bevorzugte Anwendungsfall der Erfindung. Insoweit Einschnitte auch bei Transporterreifen, Leicht-LKW-Reifen oder gar bei Schwer-LKW-Reifen eingesetzt werden, steigt deren erforderliche Dicke, und zwar etwa mit der Wurzel des vorgesehenen Reifen-Innendruckes und linear mit der Profil-Tiefe; bei Schwer-LKW mit rund 4-fachem Luftdruck und doppelter Profil-Tiefe liegen also gangbare Einschnitt-Dicken zwischen 1,6 und 4,0 mm, vorzugsweise bei 2,4 mm.

Die vorbekannten Vorschläge, nach einem - in Abhängigkeit von der Einschnitt-Dicke - begrenzten Verformungsweg Formschluss herbeizuführen, lassen sich in drei Gruppen gliedern:

In eine erste Gruppe gehören die Vorschläge, die gewellte Einschnitte lehren. Hierbei haben - abweichend von der erfindungsgemäßen Gattung - alle Erhebungen eine linienförmige höchste Stelle - häufig als "Berg", noch genauer und deshalb im Folgenden als "Bergkamm (BK)" bezeichnet - und alle Senken eine linienförmige tiefste Stelle, die häufig als "Tal", hier genauer als "Talsohle (TS)" bezeichnet wird. Solche Vorschläge finden sich in der Figur 2 der FR-PS 791.250, EP 0 564 435 A1, DE-OS 44 27 895 A1, AT-PS 401 160 B und den DE-OS 196 50 702 und 197 10 400, wobei bei letzterer die Bergkämme und Täler krummlinig sind, bei den anderen geradlinig oder geknickt-geradlinig.

In eine zweite Gruppe gehören die Vorschläge, die so gebeulte Einschnitte lehren, dass - abweichend vom Oberbegriff des Anspruches 1 aber übereinstimmend mit dem des Anspruches 2 (sie Merkmale b und c bzw. d und e) - alle Erhebungen eine linienförmige höchste Stelle und alle Senken eine punktförmige tiefste Stelle aufweisen oder umgekehrt. Ein solcher Vorschlag findet sich in der GB-PS 1,150,295; für die Varianten der Erfindung gemäß Anspruch 2 erscheint darum dieser Stand der Technik als nächstliegend.

In eine dritte Gruppe gehören die Vorschläge, die so gebeulte Einschnitte lehren, dass - übereinstimmend mit den gattungsbildenden Merkmalen b und c des Anspruches 1 - alle Erhebungen 4 eine punktförmige höchste Stelle (hier als "Gipfel G" bezeichnet) und alle Senken 5 eine punktförmige tiefste Stelle haben (die hier als "Krater K" bezeichnet wird). Solches lehrt die WO 96/01189; sie ist deshalb für die Varianten der Erfindung nach Anspruch 1 der nächstliegende Stand der Technik.

Das gattungsbildende Merkmal a definiert - ausgehend von der üblichen Einbauweise der Lamellen so, dass sie erzeugten Einschnitte im Reifen im wesentlichen axial und radial verlaufen - die Messrichtung für die Höhe der Erhebungen und die Tiefe der Senken als etwa parallel zur Peripheriefläche der Lauffläche des hergestellten oder letztlich herzustellenden Fahrzeugreifens. Die Tiefe der Senken wird als negative Höhe aufgefasst. So kann für die Beulenhöhe und Beulentiefe (genauer: Dellentiefe) das gleiche Bezugszeichen verwendet werden: Z.

Bei allen vorgenannten Vorschlägen ist vorgesehen, dass alle Bergkämme bzw. Gipfel eines Einschnittes bzw. einer Lamelle in einer Ebene enthalten sind und genauso sind alle Täler bzw. Krater des selben Einschnittes bzw. der selben Lamelle in einer - anderen - Ebene enthalten, wobei beide Ebenen zueinander parallel sind. Zumindest für die Vorschläge der ersten und der dritten Gruppe erscheint es als zweckmäßig, mittig zwischen diesen beiden Ebenen eine ebene Bezugsfläche zu definieren; weil von ihr aus die Ausbeulungshöhen und Tiefen gemessen werden sollen, wird sie im Folgenden als Z=0-Ebene bezeichnet.

In den beiden folgenden Absätzen wird das Bild betrachtet, das sich ergibt, wenn eine Lamelle entlang ihrer Z=0-Ebene geschnitten wird. Die dadurch erzeugten Schnittlinien sind solche, deren Höhe/Tiefe Z mittig zwischen der Höhe der höchsten Stellen der Erhebungen und der Tiefe der tiefsten Stellen der Senken liegt; es erscheint zweckmäßig, diese Höhe/Tiefe Z als 0 zu definieren.

Bei den vorbekannten Vorschlägen der ersten Gruppe sind die erzeugten Schnittlinien gerade oder gebogen (DE 197 10 400). Sie sehen alle gleichartig aus und verlaufen so zueinander parallel versetzt, dass sie sich nicht schneiden. Der Abstand zwischen diesen Linien entspricht der halben Periodenlänge.

Es erscheint deshalb zweckmäßig die so erzeugten Linien im folgenden als Teilungslinien T zu bezeichnen. Die Teilung erfolgt bei diesen Vorschlägen nur eindimensional, nämlich senkrecht zu den Teilungslinien.

Beim vorbekannten Vorschlag der zweiten Gruppe zeigen sich bei gleich gewählter Schnittebene isoliert liegende, fluchtend ausgerichtete Rauten, also gleichseitige Vierecke. Die fluchtenden Seiten dieser Rauten beschreiben genau zwei Scharen parallel zueinander verlaufender, gerader, unterbrochener Linien. Innerhalb einer jeden Schar verlaufen also die - unterbrochenen - Linien parallel; die Linien verschiedener Scharen kreuzen sich.

Die Periodizität dieses Vorschlages ist noch einfacher darstellbar, wenn als Bezugsebene die Ebene gewählt wird, innerhalb derer sich die linienförmigen Extreme befinden (egal ob sie nun als Bergkämme oder Talsohlen erscheinen). Dann ergeben sich linienartig berührende, fluchtend ausgerichtete Rauten, also gleichseitige Vierecke. Die fluchtenden Seiten dieser Rauten beschreiben genau zwei Scharen parallel zueinander verlaufender, gerader, ununterbrochener - also kontinuierlicher - Linien. Innerhalb einer jeden Schar verlaufen also die - kontinuierlichen - Linien parallel; die Linien verschiedener Scharen kreuzen sich. Es erscheint deshalb zweckmäßig die so erzeugten Linien im folgenden als Teilungslinien T zu bezeichnen. Die Teilung erfolgt bei diesem Vorschlag zweidimensional, also flächig. Der Abstand zwischen benachbarten parallelen Teilungslinien entspricht der Periodenlänge.

Zur Betrachtung des vorbekannten Vorschlages der dritten Gruppe wird zweckmäßigerweise wieder die Schnittebene zwischen die gipfelenthaltende und kraterenthaltende Ebene gelegt. Als Schnitt zeigen sich dann einander berührende, fluchtend ausgerichtete Rechtecke oder Quadrate. Die fluchtenden Seiten dieser Vierecke beschreiben genau zwei Scharen parallel zueinander verlaufender, gerader, ununterbrochener - also kontinuierlicher - Linien, die im Folgenden als Teilungslinien bezeichnet werden. Innerhalb einer jeden Schar verlaufen also die - kontinuierlichen - Teilungslinien parallel; die Linien verschiedener Scharen kreuzen sich. Auch diese periodische Teilung ist zweidimensional, gleichbedeutend mit "flächig". Der Abstand zwischen benachbarten parallelen Teilungslinien entspricht der halben Periodenlänge.

Gemäß den Merkmalen f und g der Oberbegriffe der Ansprüche 1 und 2 soll auch bei den erfindungsgemäßen Lamellengestalten die Abfolge der Erhebungen und Senken einer im wesentlichen gleichmäßigen, flächigen Teilung folgen, wobei besagte flächige Teilung durch im wesentlichen gerade Teilungslinien T beschrieben beschrieben ist, deren Höhe/Tiefe (Zt; wobei zweckmäßigerweise Zt=0 definiert wird) gemäß Anspruch 1 - vorzugsweise mittig - zwischen der Höhe Zg der Gipfel G und der Tiefe Zk der Krater K liegt, aber gemäß Anspruch 2 auf der Höhe Zbk oder Zts der linienförmigen Extreme, also der Bergkämme BK bzw. der Talsohlen TS liegt.

Dabei sollen gemäß dem gattungsbildenden Merkmal h sowohl des Anspruches 1 wie des Anspruches 2 diese Teilungslinien T in zumindest zwei Scharen geordnet sein, wobei die Teilungslinien T innerhalb einer jeden Schar parallel zueinander verlaufen und sich die Teilungslinien T verschiedener Scharen kreuzen.

Es ist bekannt, dass mit Rücksicht auf die Reifeneigenschaften die Einschnitte so dünn wie möglich sein sollen.

Der Erfinder hat erkannt, dass die optimale Lamellenform nicht nur die unmittelbar zu erzielenden Reifeneigenschaften zu berücksichtigen hat, sondern auch die Beanspruchung der Lamellen selber: Die Lamellen müssen so dick sein, dass deren Ausknicken und Verbiegen sicher vermieden ist. Während die günstigsten Lamellendicken bislang durch "Erfahrung", das heißt letzendlich durch ein try-and-error-Verfahren, bemessen sind, hat der Erfinder zunächst weiter analysiert:

Die Lamellen werden auf radialen Druck und damit auf Knickung belastet während der profilerzeugenden Resterhebung des Reifenrohlinges nach dem Schließen der Form und vor Beginn der Vulkanisation. Bei der Herstellung solcher Reifen, deren Resterhebung kleiner als die Einschnitt-Tiefe ist, werden die Lamellen ab Berührung der den Einschnittgrund bildenden Kanten mit der Rohlingsperipherie zudem in den Segmentgrenzbereichen auf radialen und in Umfangsrichtung wirkenden Druck und damit auf Knickung und Biegung belastet.

Aus dieser Analyse hat der Erfinder die Aufgabe abgeleitet, eine solche Lamellenform anzugeben, die neben gutem Formschluss der damit erzeugten, einen Einschnitt begrenzenden Positiv-Flächen eine im Verhältnis zur Lamellendicke größere Biegesteifigkeit und ganz besonders eine größere Knickstabilität liefert.

Ausgehend von den erläuterten gattungsbildenden Merkmalen wird diese Aufgabe gemäß den übereinstimmenden kennzeichnenden Merkmalen der Ansprüche 1 und 2 dadurch gelöst, dass diese Teilungslinien T, nicht nur in zwei sondern in drei Scharen geordnet sind, wobei sich die Teilungslinien T verschiedener Scharen unter einem Winkel von etwa 60° kreuzen und so ein Gatter aus - etwa gleichseitigen - Dreiecken bilden.

Ferner wird die genannte Aufgabe durch die Lamelle gemäß Patentanspruch 7, durch die Vulkanisationsform gemäß Patentanspruch 13 und durch den Fahrzeugreifen gemäß Patentanspruch 14 gelöst.

Zweckmäßige Weiterbildungen der Erfindung sind Gegenstand der betreffenden abhängigen Ansprüche.

Der Erfindung liegt die Erkenntnis zugrunde, dass Dreiecke, insbesondere gleichseitige Dreiecke, als Grundform eines Fachwerkes zu viel höherer Stabilität führen als Vierecke.

Betrachtet man die Knoten zwischen den als starr angenommenen Stäben oder Stegen eines ebenen Fachwerkes als Gelenke mit einer Drehachse senkrecht zur Ebene des Fachwerkes, so zeigt sich, dass Stabdreiecke stabil sind, Vierecke hingegen nicht; Vierecke sind entlang ihrer Diagonalen grundsätzlich stauchund dehnbar. Infolgedessen werden die gebeulten und somit biegeweichen Wandungen von Lamellen - also die Ausfachungen, wenn man in der Sprache der Fachwerk-Architektur verbleibt - der vorbekannten Vorschläge aus der zweiten und der dritten Gruppe schon bei kleinster Last in der radialen Richtung des zu fertigenden Reifens auf Biegung beansprucht. Auch die Knoten selber werden - entgegen vorgenannter Hypothese der Gelenkigkeit - auf Biegung beansprucht. Demzufolge knicken solche Lamellen schon bei recht kleinen Radiallasten im Verhältnis zur Dicke ihrer Wandung aus.

Bei der erfindungsgemäßen Gestaltung hingegen wirken die Blechbereiche in der Nähe der drei Scharen gerader Teilungslinien wie ein in der Z=0-Bezugsfläche stabiles, ebenes Fachwerk. Ein Knickfreiheitsgrad besteht nur noch senkrecht zur Z=0-Bezugsfläche, also im wesentlichen in der Umfangsrichtung des zu fertigenden Reifens, wenn von der üblichen, etwa axialen Ausrichtung der Einschnitte in der Draufsicht auf eine Reifenlauffläche ausgegangen wird. Es besteht kein Knickfreiheitsgrad mehr innerhalb der Z=0-Bezugsfläche.

Darum sind erfindungsgemäße Lamellen bis zu höheren Radialkräften im Verhältnis zur Lamellenwandstärke knickstabil. Dies ermöglicht eine geringere Lamellenwandstärke mit dem Effekt auf die Reifeneigenschaften, dass schon bei besonders geringer Klotzverbiegung die einen Einschnitt begrenzenden - besonders eng beabstandeten - Wandungen aufeinander aufsetzen und so den gewünschten Formschluss erzeugen. Hierdurch erreichen erfindungsgemäße Reifen ein Trockenhandling, das dem bester Sommerreifen nahe kommt. Zudem zeigen sich leichte Vorteile im Abrieb ohne Nachteilen auf Matsch.

Die vorbekannte Ausbildung gemäß Absatz 2 der Seite 5 dieser Beschreibung, wonach alle Bergkämme bzw. Gipfel eines Einschnittes bzw. einer Lamelle in einer Ebene enthalten sind und genauso alle Täler bzw. Krater des selben Einschnittes bzw. der selben Lamelle in einer - anderen - Ebene enthalten sind, die zur erstgenannten Ebenen parallel ist, ist auch bei der Erfindung möglich und in mehreren Ausführungsbeispielen dargestellt.

Aber synergistisch mit der Ausbildung stabiler Fachwerke in der Z=0-Bezugsfläche zusammenwirkend ist - wie bereits erwähnt -eine noch filigranere Bemessung der Lamellenwandstärke möglich, wenn gemäß Anspruch 11 die als Bezugsfläche dienende Z=0-"Ebene" nicht exakt eben ist, sondern in der Draufsicht auf die zu fertigende Reifenlauffläche - das entspricht der Draufsicht auf die in der Vulkanisationsform zu verwurzelnde Lamellenstirnfläche - zylindermantelartig oder noch besser prismenmantelartig geknickt ist. Mit Rücksicht auf die bevorzugten Wölbungen bzw. Knickungen wird bei der Erfindung nicht von der "Z=0-Ebene" gesprochen, sondern allgemeiner von der "Z=0-Bezugsfläche".

Weil die Gitterstäbe zwischen den Fachwerk-Knoten möglichst knickstabil im Verhältnis zu ihrer Breite und Dicke sein sollen, sind sie vorzugsweise nicht gebogen, sondern gerade. Also empfiehlt es sich, die bevorzugte Wölbung auf die Fachwerk-Knoten zu konzentrieren. Dies führt zur Gestaltung nach Anspruch 12, dergemäß die Knicklinien der Z=0-Bezugsfläche mit zumindest einigen (weiter bevorzugt: allen) Teilungslinien T einer der drei Scharen von Teilungslinien T zusammenfallen, wobei diese weiter bevorzugt - bezogen auf den fertigen Reifen - im wesentlichen radial verlaufen. Dabei bringt schon ein Knickwinkel von 3° von Periode zu Periode eine beträchtliche Stabilisierung; Knickwinkel oberhalb von 30° erscheinen unnötig.

Die Knickungen der Z=0-Bezugsfläche können auch zickzackförmig sein, also nicht monoton, sondern in ihrer Orientierung wechselnd, z. B. alternierend. Dann lassen sich besonders große Knickwinkel unterbringen.

Infolge der hohen Stabilität der erfindungsgemäßen Dreiecksstruktur der nicht- oder nahezu nicht-ausgebeulten Lamellenbereiche sind Lamellenwandstärken an PKW-Reifen möglich unterhalb von 0,4 mm, zusammen mit in der Draufsicht leicht geknicktem Verlauf der Z=0-Bezugsfläche etwa herunter bis 0,3 mm, bei stärker geknicktem Verlauf, womit Knickwinkel ab 7° gemeint sind, noch dünner.

Die genannten Blechwandstärken beziehen sich allesamt auf den verwendeten Blechrohling. Die fertig geprägten Lamellenbleche zeigen diese Wandstärke nur im Bereich der Z=0-Bezugsfläche; in den ausgebeulten Bereichen ergeben sich durch die Verstreckung entsprechend verringerte Wandstärken.

Beim gekanteten oder geknickten Verlauf der Z=0-Bezugsfläche befinden sich auch alle Bergkämme bzw. Gipfel eines Einschnittes bzw. einer Lamelle in einer gewölbten oder gekanteten oder gewellten oder zickzackförmig gekanteten Fläche; und bevorzugt sollten sich genauso alle Täler bzw. Krater des selben Einschnittes bzw. der selben Lamelle in einer gewölbten oder gekanteten oder gewellten oder zickzackförmig gekanteten Fläche befinden, wobei vorzugsweise daran festgehalten wird, dass beide Flächen zueinander parallel sind.

Weil mit ihr flächig stabile Fachwerkabteilungen zu räumlich stabilem Gesamtfachwerk zusammengesetzt werden, wird mit dieser Maßnahme des Abkantens oder Abknickens gemäß den Ansprüchen 11 und 12 auch noch die einzige Knickfähigkeit, die die Gestaltung gemäß Anspruch 1 und/oder 2 zulässt, nämlich die senkrecht zur Z=0-Bezugsfläche, gesenkt.

Die Gestalt und die Vorteile des Dreiecksfachwerkes erfindungsgemäßer Lamellen treten besonders deutlich zutage, wenn um die Teilungslinien herum schmale Bereiche, die sich als Stege oder Stäbe ansprechen lassen, von der prägenden Ausbeulung ausgenommen bleiben. In der Sprache des Anspruches 9 haben dafür die zueinander parallelen Basislinien B aneinander anschließender - also benachbarter - pyramidenförmiger Erhebungen oder Senken einen Abstand größer 0 voneinander, sodass sie als - ggf. verrundete oder gebrochene - Körperkanten erscheinen. Dabei sollte die Breite b der Stegflächen S zwischen parallelen Basislinien benachbarter Pyramiden kleiner sein als 40 % der Kantenlänge der Pyramiden-Grundflächen, vorzugsweise ca. 20 % davon.

Gemäß Anspruch 10 sollte die Breite b besagter Stegflächen S höchstens das Doppelte der Stegdicke betragen, wobei letztere beim einfachsten Fertigungsverfahren, dem Prägen, im wesentlichen gleich der Dicke (=Wandstärke) des Blechrohlinges ist, aus dem die Lamelle hergestellt wird.

Nach diesen Ausführungen zur technischen Funktionsweise der Erfindung und ihren darin begründeten Weiterbildungen gemäß den Ansprüchen 9 bis 12 nun enger zurück zur Beschreibung der Gestalt erfindungsgemäßer Lamellen und Einschnitte:

Für Varianten der Erfindung nach Anspruch 1 ist es zweckmäßig, etwa mittig (bei nicht-paralleler Anordnung: winkelhalbierend) zwischen die beiden die Extreme (Gipel/Krater) enthaltenden Flächen eine Bezugsfläche zu definieren, jedenfalls dort, wo sich ununterbrochen durchgehende Linien zeigen, die Teilungslinien. Auf diese Bezugsfläche sollten sich alle Höhen- und Tiefenangaben der Gipel und Krater beziehen. Diese Fläche wird in dieser Anmeldung in diesem Zusammenhange als Z=0-Bezugsfläche bezeichnet. Sofern - wie bevorzugt - beide die Extreme (Gipfel und Krater) enthaltenden Flächen parallel zueinander sind, ist auch die Z=0-Bezugsfläche zu ihnen parallel.

Für Varianten der Erfindung nach Anspruch 2 ist es zweckmäßig, eine dieser beiden Flächen selber - nämlich diejenige, die die linienförmigen Extreme (Talsohlen bzw. Bergkämme) enthält - als die Bezugsfläche zu definieren, auf die sich alle Höhenund Tiefenangaben der Bergkämme bzw. Talsohlen beziehen. Diese Fläche wird in dieser Anmeldung in diesem Zusammenhange als Z=0-Bezugsfläche bezeichnet.

Neben den détailliert dargelegten Varianten der Erfindung, alle Ausbeulungen mit ihrer Spitze in eine Orientierung weisen zu lassen (Anspruch 2, Kurzform: ++++++++) oder alternierend in die beiden von der Z=0-Bezugsfläche aus möglichen Orientierungen weisen zu lassen (Kombination der Ansprüche 1 und 6, Kurzform: +-+-+-+-), sind nach Anspruch 7 auch andere Periodizitäten möglich, zum Beispiel der Kurzform +---+---.

Letztgenannte Ausgestaltung der Erfindung ist eine Mischform zwischen der einen Reinform gemäß Anspruch 1 in Kombination mit Anspruch 6 und der anderen Reinform gemäß Anspruch 2, weil sie überwiegend Anspruch 2 gerecht wird, jedoch am Rande der wenigen invers-orientierten Extreme (hier mit "+" bezeichnet) der Kombination der Ansprüche 1 und 6 gerecht wird. Mischformen zwischen den Ansprüchen 1 und 2 sind Gegenstand des Anspruches 7. (Nicht die Erfindung veranlasste die Aufteilung des Hauptbegehrens in zwei Nebenansprüche, sondern allein der unterschiedliche relevante Stand der Technik.) Demgemäß zeigen solche Mischlamellen aus einer Z=0-Bezugsfläche, die die drei sich gleichmäßig kreuzenden Scharen im wesentlichen gerader Teilungslinien T enthält und damit ein Gatter aus etwa gleichseitigen Dreiecken bildet, entlang zumindest einer der Winkelhalbierenden besagter sich kreuzender Teilungslinien herausragende verschieden orientierte Ausbeulungen in einer Orientierungsabfolge, die von der Alternierung +-+-+-+abweicht, vorzugsweise gemäß der Kurzform +---+---, wobei als positive Ausbeulung Erhebungen und als negative Ausbeulung Senken aufgefasst werden oder umgekehrt.

So lange Periodenlängen - beim letztgenannten Beispiel vier Teilungslängen - empfehlen sich aber nur bei sehr kleinen Teilunglängen im Verhältnis zur Einschnitt-Tiefe; es sollten mindestens zwei Periodenlängen in die Einschnitt-Tiefe passen.

Die Achsen der wie auch immer gewählten Periodizität sollten die Winkelhalbierenden der Dreiecksgrundflächen sein.

Gemäß Anspruch 3 sollte sich jede Erhebung 4 einer erfindungsgemäßen Lamelle 1 als - abgesehen von evt. Kantenverrundungen oder -brechungen - eine auf einem etwa gleichseitigen Dreieck als Grundfläche aufbauende, erhabene Pyramide darstellen und analog gemäß Anspruch 4 sollte sich jede Senke 5 einer erfindungsgemäßen Lamelle 1 als - abgesehen von evt. Kantenverrundungen oder -brechungen - eine auf einem etwa gleichseitigen Dreieck als Grundfläche aufbauende, vertiefte Pyramide darstellen.

Wenn die Höhe dieser Pyramiden gleich der Quadratwurzel aus einem Sechstel (ca. 0,4082) mal ihrer Basislinienlänge gewählt wird und übereinstimmend mit Anspruch 8 (also abweichend von den Ansprüchen 9 und 10) die Basislinien benachbarter Ausbeulungen zusammenfallen, also den Abstand 0 haben, und wenn gemäß Anspruch 6 die Orientierung (Erhebung oder Senkung) der Ausbeulungen entlang der Winkelhalbierenden der Grundflächen alterniert, dann stellt sich das Ergebnis als alternierend auf die Spitze gestellte Würfel dar, also als eine alternierende Abfolge von Würfelinnenflächen und Würfelaußenflächen; zweckmäßigerweise wird aber im Hinblick auf eine ausreichend leichte Entformbarkeit der letzlich zu fertigenden Reifen die Pyramidenhöhe kleiner gewählt, besonders bevorzugt bei etwa 30 % der Basislinienlänge.

Dabei wird die Schnittlinie zwischen einer Seitenfläche besagter Pyramide und besagter Grundfläche in der exakt ebenen oder gemäß Anspruch 11 gewölbten oder gekanteten Z=0-Bezugsfläche als "Basislinie B" bezeichnet.

Die mit Lamellen gemäß Anspruch 1 erzeugten Einschnitte verhalten sich gegenüber Vortriebs- und Verzögerungskräften gleich, also nicht drehsinn-abhängig, wenn gemäß Anspruch 5 alle drei Basislinien B aller Pyramiden mittig zwischen der Höhe Zg der Gipfel G und der Tiefe (Zk) der Krater K liegen.

Abweichend von allen vorbekannten Vorschlägen ist es aber auch möglich, die Z=0-Bezugsfläche aussermittig zwischen die alle Gipfel enthaltende und die alle Krater enthaltende Fläche zu legen, mit dem Ergebnis, dass der Betrag der Kratertiefe kleiner als der Betrag der Gipfelhöhe wird oder umgekehrt. Damit wird ein drehsinngebundenes Verhalten der Einschnitte in der Reifenlauffläche erzeugt. Die Ausführungen gemäß Anspruch 2, wo wie gesagt die Z=0-Bezugsfläche sogar mit einer der Extreme enthaltenden Fläche zusammenfällt, zeigen aus analogen Gründen ebenfalls ein drehsinnabhängiges Verhalten.

Eine solche Drehsinnbindung kann insbesondere für heckgetriebene Fahrzeug ausgenutzt werden, deren Hinterachs-Reifen im wesentlichen auf guten Vortrieb hin auszulegen sind und deren Vorderachs-Reifen im wesentlichen auf gute Bremseigenschaften hin auszulegen sind. Zweckmäßigerweise wird eine solche drehsinngebundene Gestaltung der Einschnitte mit einer an sich bekannten drehsinngebundenen Gestaltung der übrigen profilbildenden Elemente verknüpft, z. B. mit einer pfeilförmigen Anordnung von Quernuten.

Die besonders wichtige Periodizität in der Kurzschreibweise +-+-+-+- hat den Vorteil, eine Drehsinnbindung zu vermeiden bei kürzestmöglicher Periodenlänge, nämlich zwei Teilungslängen, was umgekehrt bedeutet, dass die Teilungslänge einigermaßen groß gewählt werden kann, für PKW-Reifen bevorzugt ca. 3 mm. Allzu kleine Teilungslängen lassen die abstützenden Flächen zu klein werden und wirken daher weniger versteifend. Die Lamellen dieser alternierenden Periodizität sind gemäß Anspruch 6 dadurch gekennzeichnet, dass an jede der drei Basislinien (B) einer dreiecks-pyramidenförmigen Erhebung 4 eine dreiecks-pyramidenförmige Senke 5 mit jeweils einer Basislinie B anschließt und, dass an jede der drei Basislinien B einer dreiecks-pyramidenförmigen Senke 5 eine dreiecks-pyramidenförmige Erhebung 4 mit jeweils einer Basislinie (B) anschließt.

Die Lamellen mit nicht-alternierender Periodizität, also der Kurzform ++++++++..., unterfallen Anspruch 2; die Z=0-Bezugsfläche mit ihren unveränderten Teilungslinien darin wird dabei zur die linienförmigen Extreme enthaltenden Fläche, weil die Teilungslinien selber zu den linienförmigen Extremen werden.

Erfindungsgemäße Lamellen sind dazu bestimmt, in dem das Laufflächenprofil prägenden Bereich der Kaverne einer Vulkanisationsform zur Herstellung von Reifen befestigt zu werden. Gemäß Anspruch 13 brauchen nicht alle Lamellen erfindungsgemäßer Vulkanisationsformen erfindungsgemäß gestaltet zu sein; vielmehr ist auch eine Kombination mit anderen Lamellentypen möglich. Besonders bevorzugt werden erfindungsgemäße Lamellen in den Formbereichen eingesetzt, die die Schulterpositive des letzlich herzustellenden Reifens abformen. Gegenüber den beispielsweise für den Laufflächen-Mittenbereich sich empfehlenden Lamellen gemäß DE 196 50 702 bringen erfindungsgemäße Einschnitte eine besonders hohe Querkraftübertragung, die im Schulterbereich am besten zur Geltung kommt.

Aus dem selben Grunde brauchen auch die unter Verwendung erfindungsgemäßer Lamellen hergestellten und mit Anspruch 14 beanspruchten Fahrzeugreifen nicht in allen Einschnitten das Negativ zu den Lamellen nach den Ansprüchen 1 und/oder 2 zu sein.

Die Besonderheit eines erfindungsgemäßen Fahrzeugreifens liegt vielmehr nur darin, dass zumindest einige seiner Einschnitte in solcher periodischer flächiger Teilung versenkte und/oder erhabene Ausbeulungen enthalten, dass - ggf. nach gedanklichem Glattbügeln der Z=0-Bezugsfläche - alle Teilungslinien genau drei verschiedenen Scharen zuzuordnen sind, wobei innerhalb einer jeden Schar im wesentlichen parallele Teilungslinien angeordnet sind und sich die Teilungslinien verschiedener Scharen unter einem Winkel von etwa 60° kreuzen, sodass die Teilungslinien so ein Gatter aus - etwa gleichseitigen - Dreiecken bilden. Vorzugsweise sind die Abweichungen vom genannten Idealwinkel von 60° kleiner als 5°.

Die Erfindung wird nachfolgend anhand von fünf Ausführungsbeispielen I - V näher erläutert. Dabei beziehen sich die Figuren 1 - 13 auf das Ausführungsbeispiel I, die Figuren 14 - 17 auf das Ausführungsbeispiel II, die Figuren 18 und 19 auf das Ausführungsbeispiel III, die Figuren 20 bis 25 auf das Ausführungsbeispiel IV und die Figuren 26 bis 37 auf das Ausführungsbeispiel V. Auf jedes der Ausführungsbeispiele sind deshalb so viele Figuren verwendet, um die komplizierte räumliche Gestalt durch Wahl unterschiedlicher Blickwinkel anschaulich werden zu lassen. Im einzelnen zeigt:

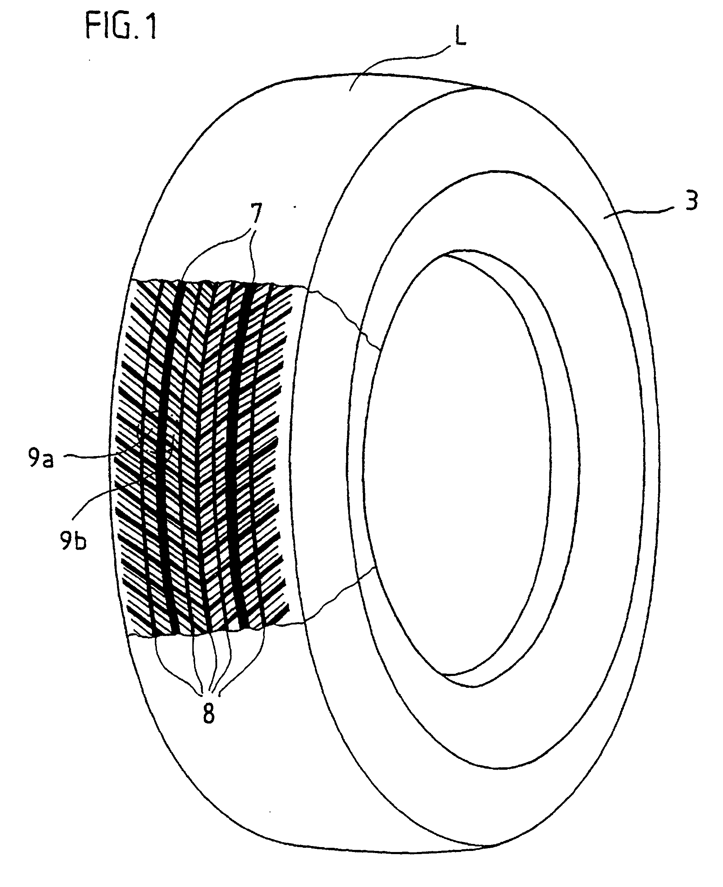

- Fig. 1: in perspektivischer Ansicht einen erfindungsgemäßen Fahrzeugreifen,

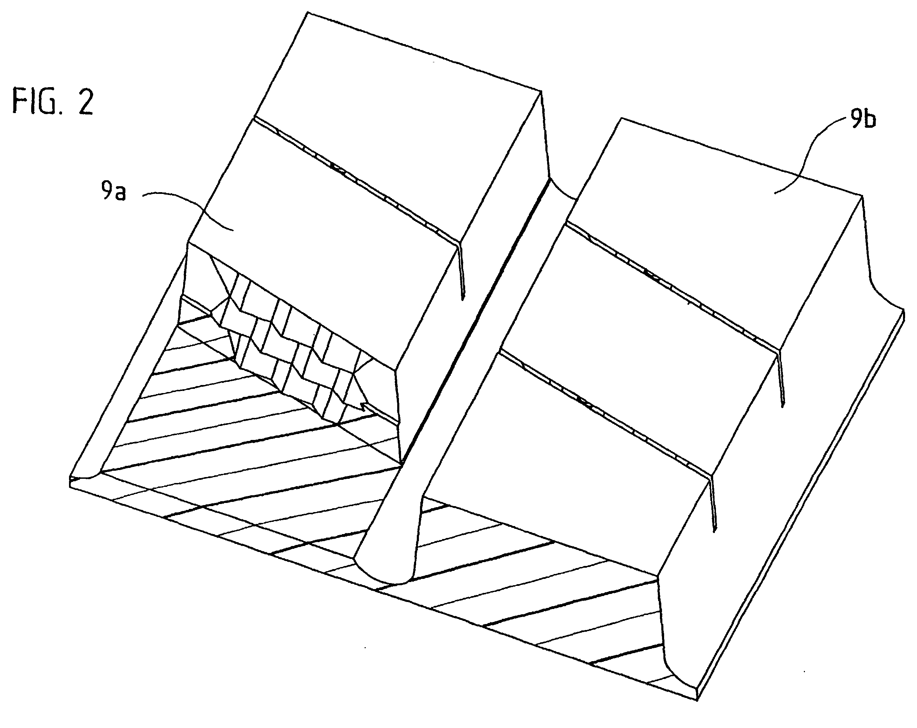

- Fig. 2: in einer perspektivischen Ansicht von weit oben und leicht rechts einen vergrößerten Ausschnitt aus dem Laufstreifen des Reifens gemäß Fig. 1, wobei ein links befindlicher Klotzbereich abgeschnitten wurde, um eine Ansicht auf eine Flankenfläche eines erfindungsgemäßen Einschnittes mit alternierender Anordnung von Erhebungen und Senken frei zu legen,

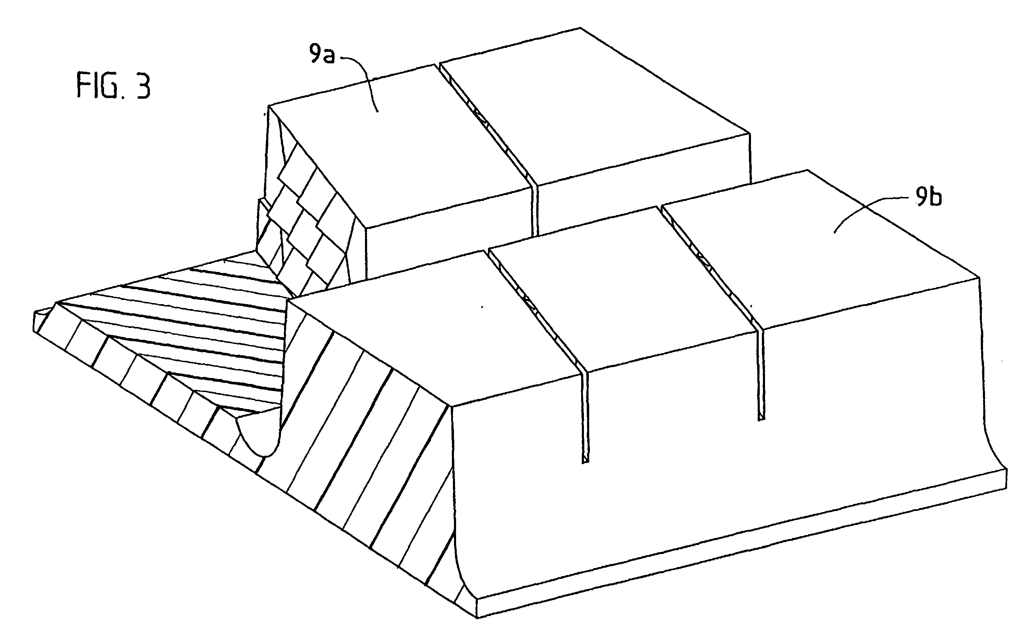

- Fig. 3: im gleichen Maßstabe den gleichen Ausschnitt wie Figur 2, jedoch von weniger weit oben und weiter rechts,

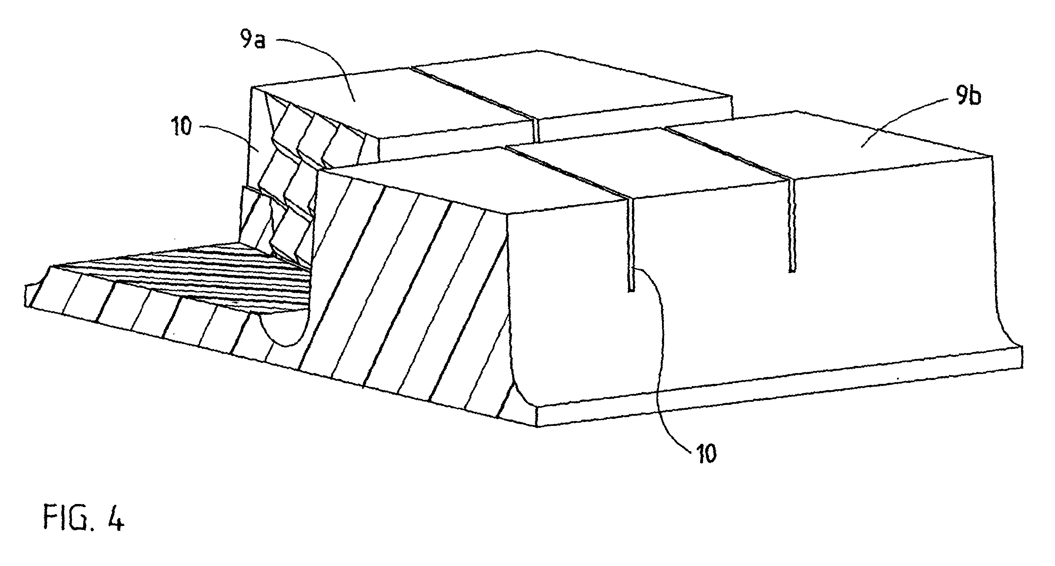

- Fig. 4: im gleichen Maßstabe den gleichen Ausschnitt wie Figur 3, jedoch von noch weniger weit oben,

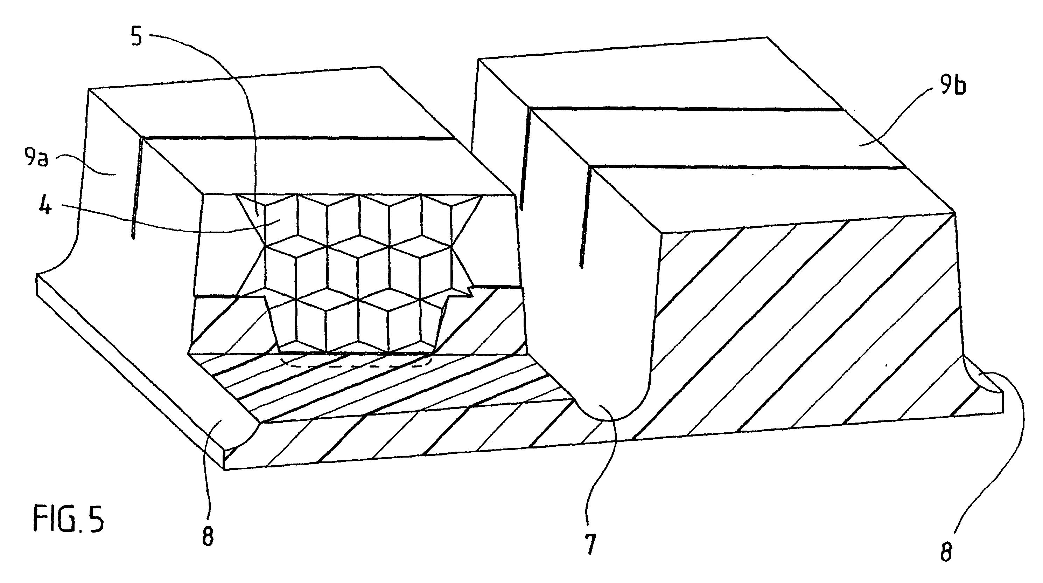

- Fig. 5: im gleichen Maßstabe den gleichen Ausschnitt wie Figur 2, jedoch von weniger weit oben und von links,

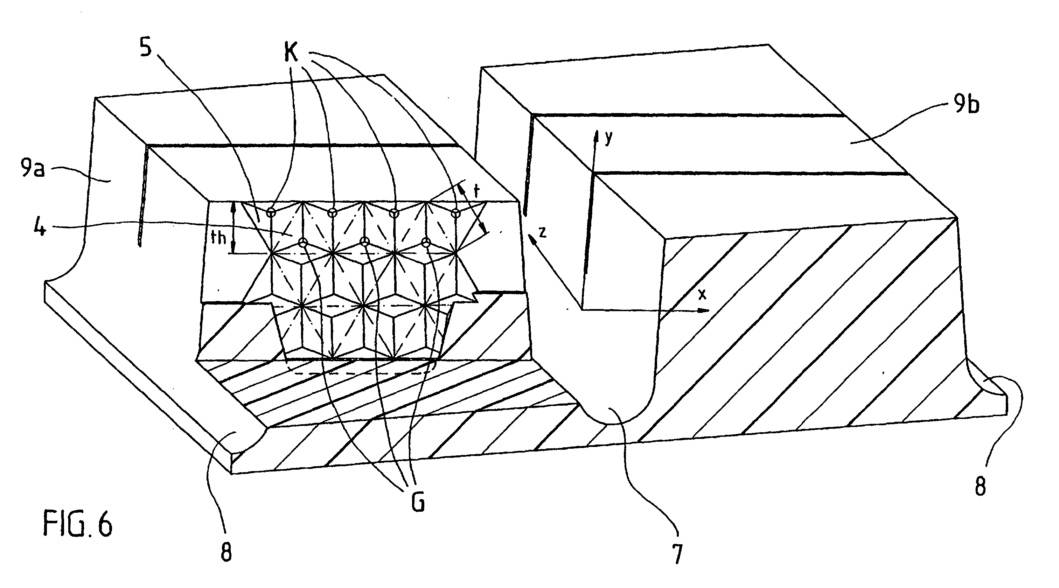

- Fig. 6: das Gleiche wie Figur 5, jedoch mit strichpunktierter Angabe der Teilungslinien,

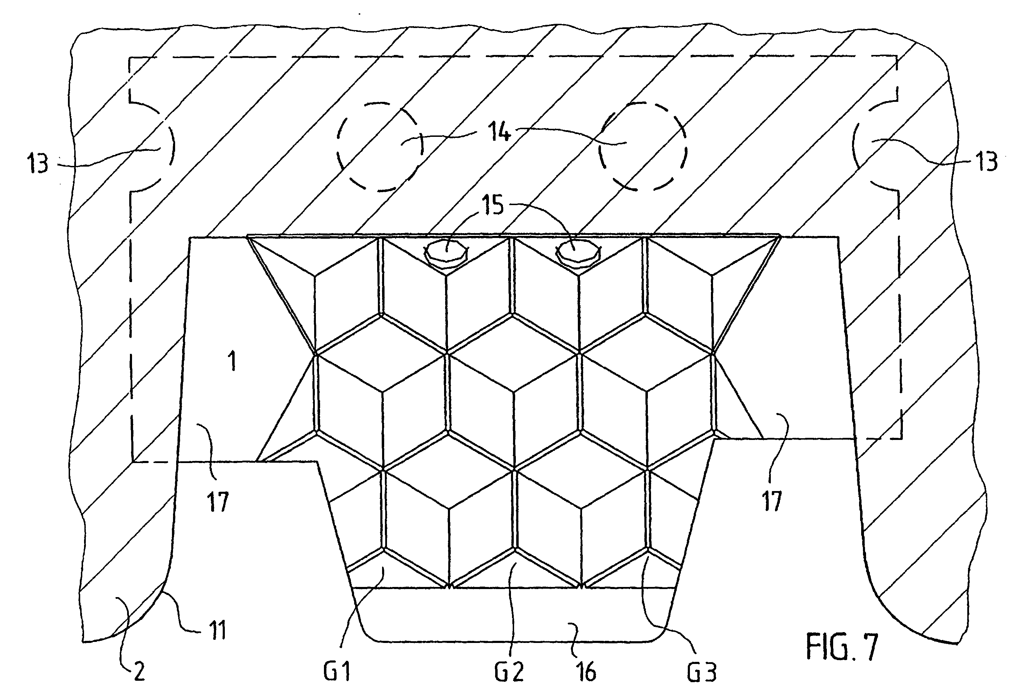

- Fig. 7: in der Draufsicht - entsprechend etwa einer Sicht in der Umfangsrichtung des herzustellenden Reifens - in einem größeren Maßstabe als die Figuren 2 bis 6 die erfindungsgemäße Lamelle, mittels derer der in den Figuren 2 bis 6 illustrierte Einschnitt erstellt wurde,

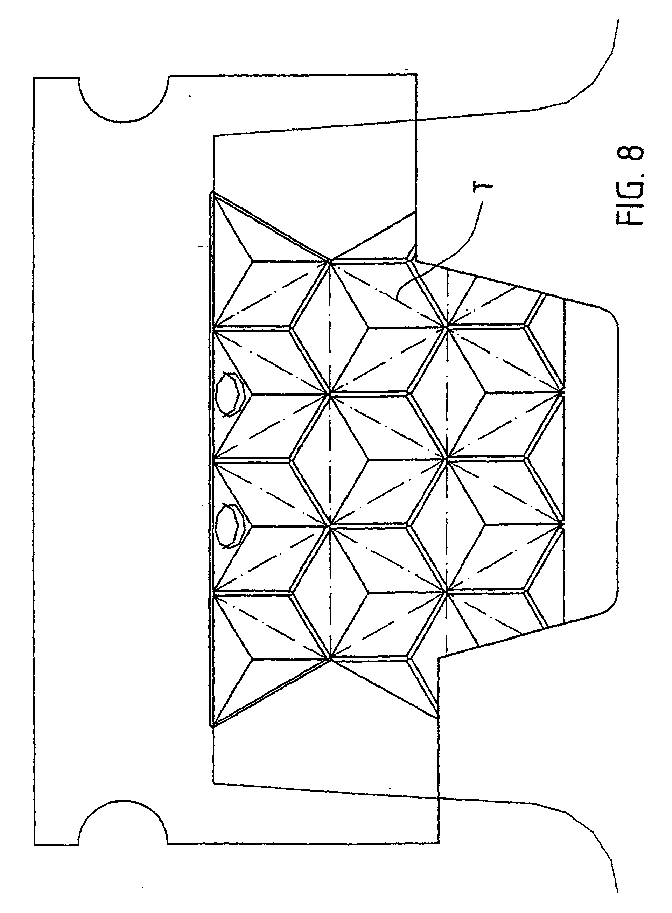

- Fig. 8: das Gleiche wie Figur 7, jedoch mit strichpunktierter Angabe der Teilungslinien,

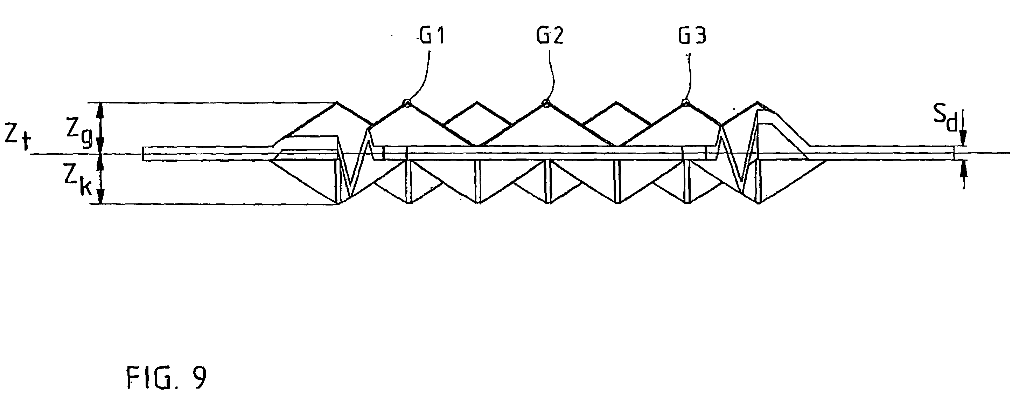

- Fig. 9: in einer Stirnansicht - entsprechend etwa einer Sicht in der radialen Richtung von innen her nach radial außen gegen die Kavernenwandung der erfindungsgemäßen Vulkanisationsform - die gleiche Lamelle im gleichen Maßstabe wie die Figuren 7 und 8,

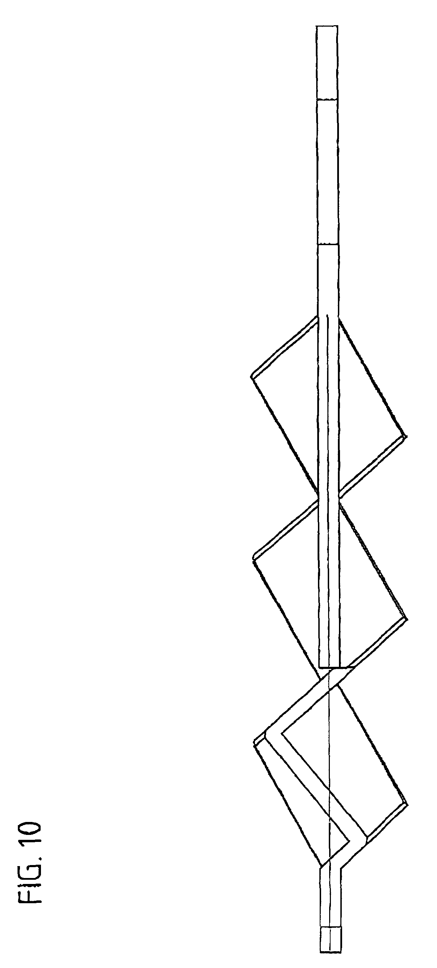

- Fig. 10: in einer zur Fig. 9 senkrechten Stirnansicht - entsprechend etwa einer Sicht in der axialen Richtung von links nach rechts der erfindungsgemäßen Vulkanisationsform - die gleiche Lamelle im gleichen Maßstabe wie die Figuren 7 bis 9,

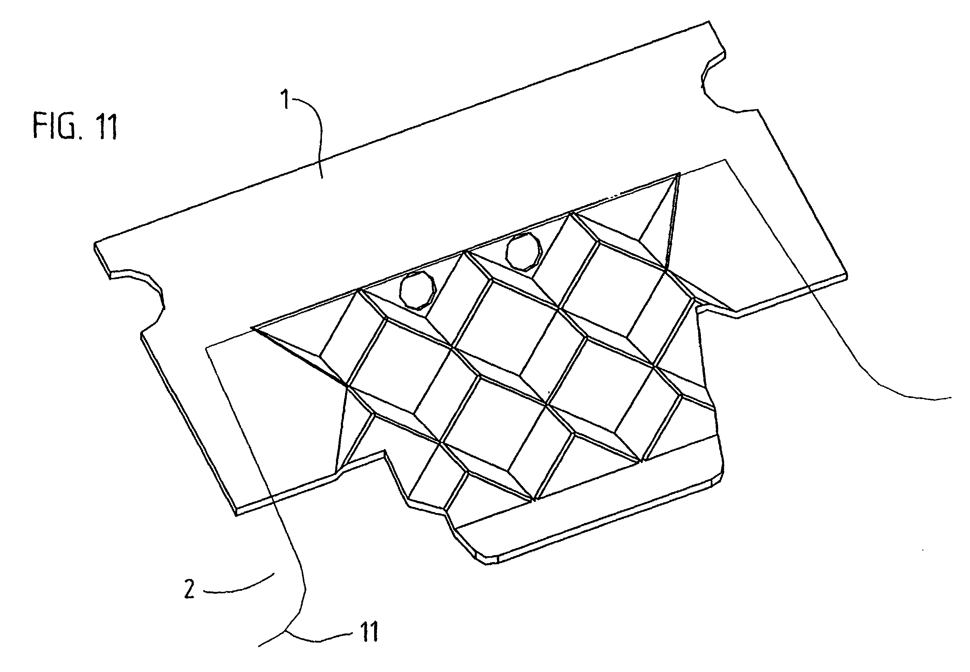

- Fig. 11: die gleiche Lamelle in einer perspektivischen Ansicht nahe dem Blickwinkel der Figur 7, jedoch leicht nach radial außen und leicht nach rechts,

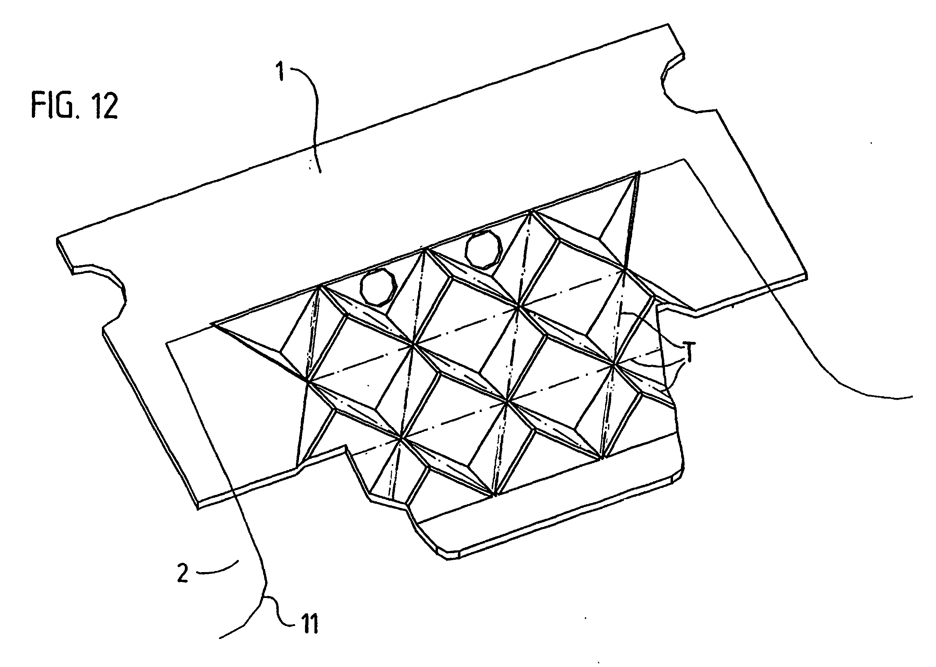

- Fig. 12: das Gleiche wie Figur 11, jedoch mit strichpunktierter Angabe der Teilungslinien,

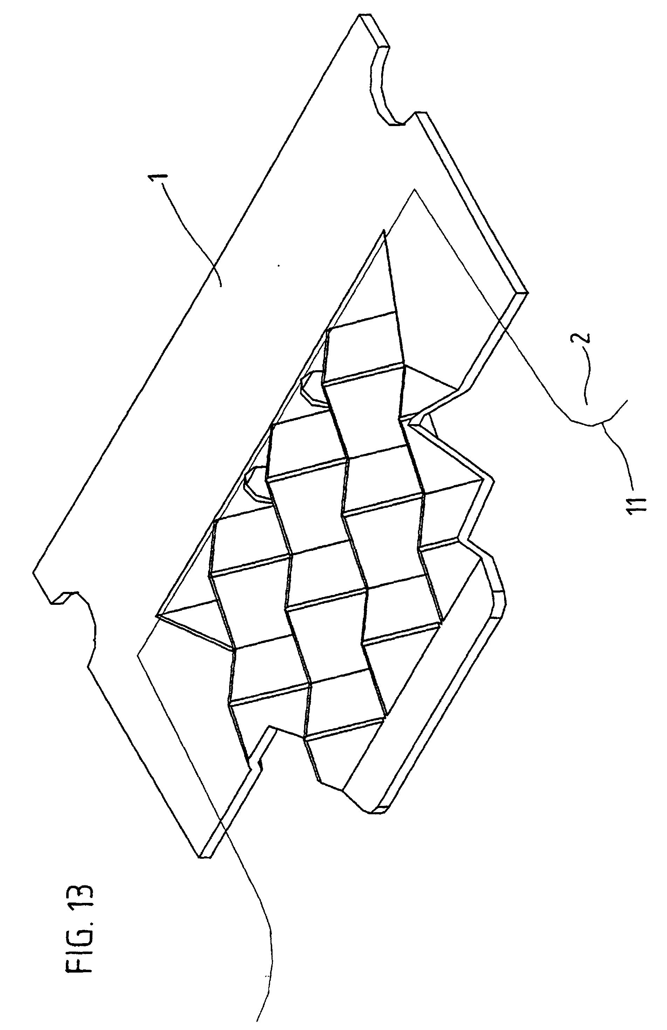

- Fig. 13: ähnlich Figur 11 die gleiche Lamelle in einer perspektivischen Ansicht, jedoch stärker nach radial außen und nunmehr von rechts nach links blickend,

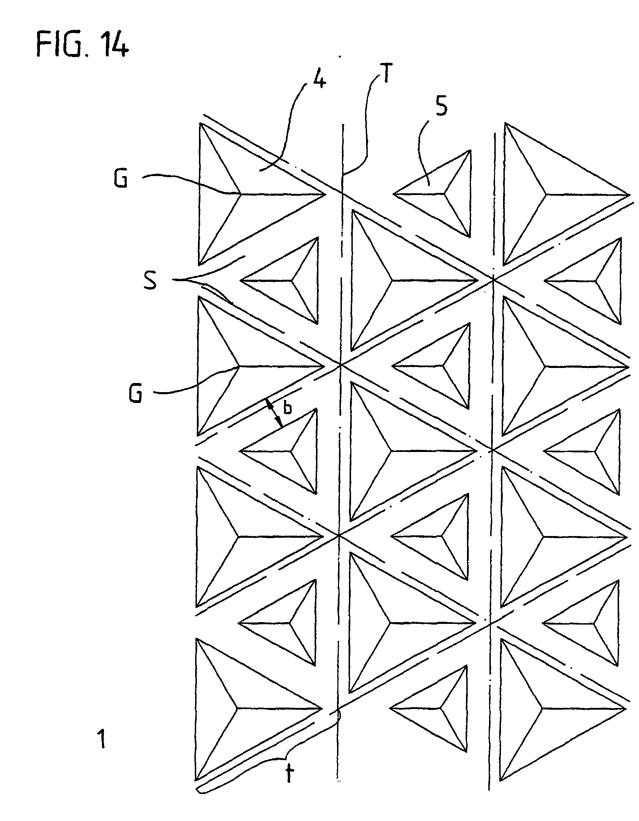

- Fig. 14: in der Draufsicht - entsprechend einer Blickrichtung etwa in Umfangsrichtung am damit herzustellenden Reifen - eine andere erfindungsgemäße Lamelle mit alternierenden Erhebungen und Senken, bei der zwischen allen benachbarten Ausbeulungen im wesentlichen in der Z=0-Bezugsebene sich erstreckende Stege belassen sind,

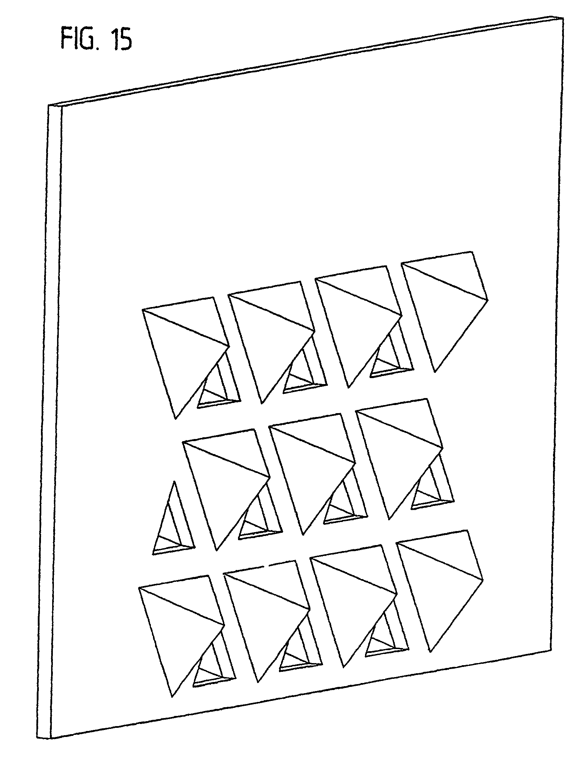

- Fig. 15: die gleiche Lamelle wie in der Figur zuvor, jedoch perspektivisch aus einem Blickwinkel leicht von radial außen und leicht von links,

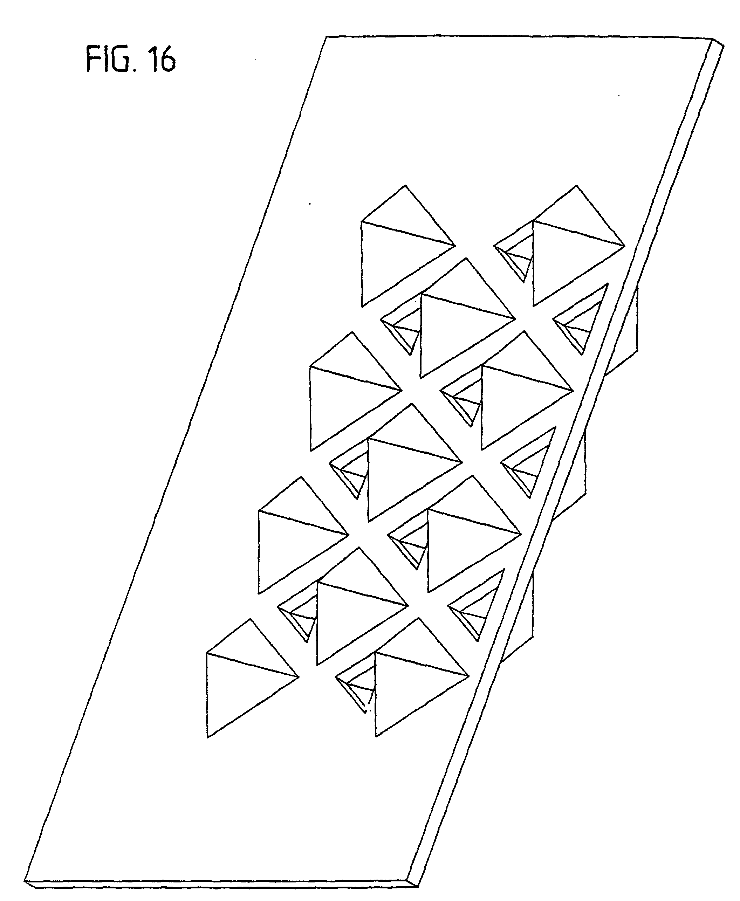

- Fig. 16: die gleiche Lamelle wie in der Figur 14, jedoch perspektivisch aus einem Blickwinkel deutlich von radial innen und leicht von links,

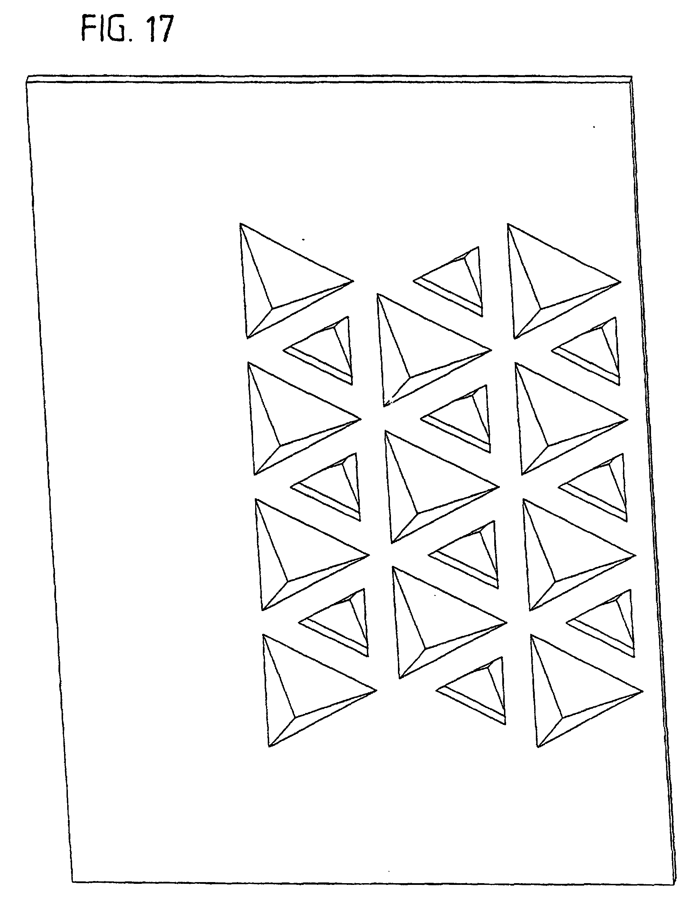

- Fig. 17: die gleiche Lamelle wie in der Figur 14, jedoch perspektivisch aus einem Blickwinkel ganz leicht von radial innen her und leicht von rechts,

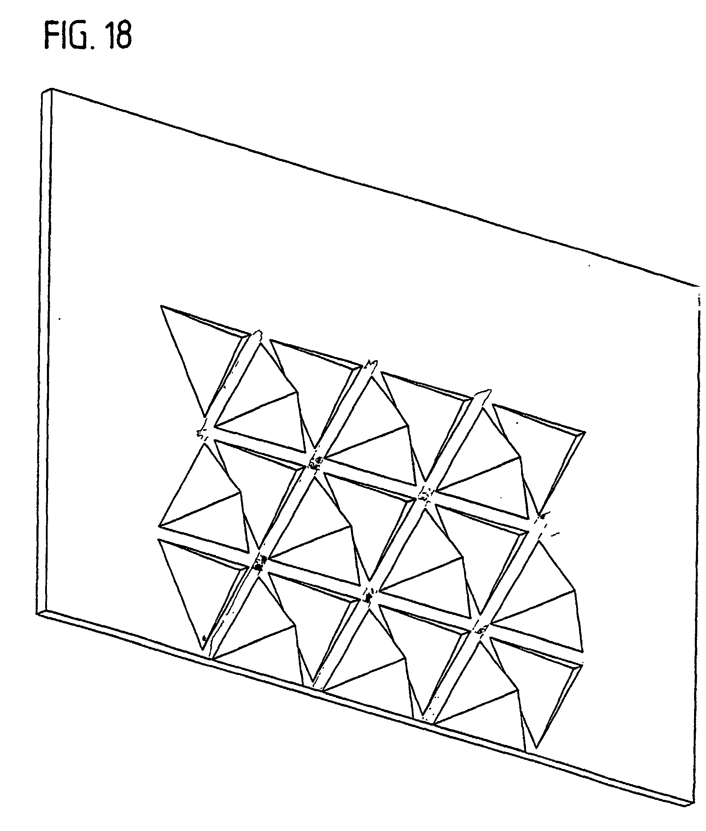

- Fig. 18: in perspektivischer Ansicht eine solche Abwandlung der in den Figuren 14 bis 17 gezeigten Lamelle, dass alle Ausbeulungen gleich herum orientiert sind, in diesem Blickwinkel als Erhebungen erscheinend,

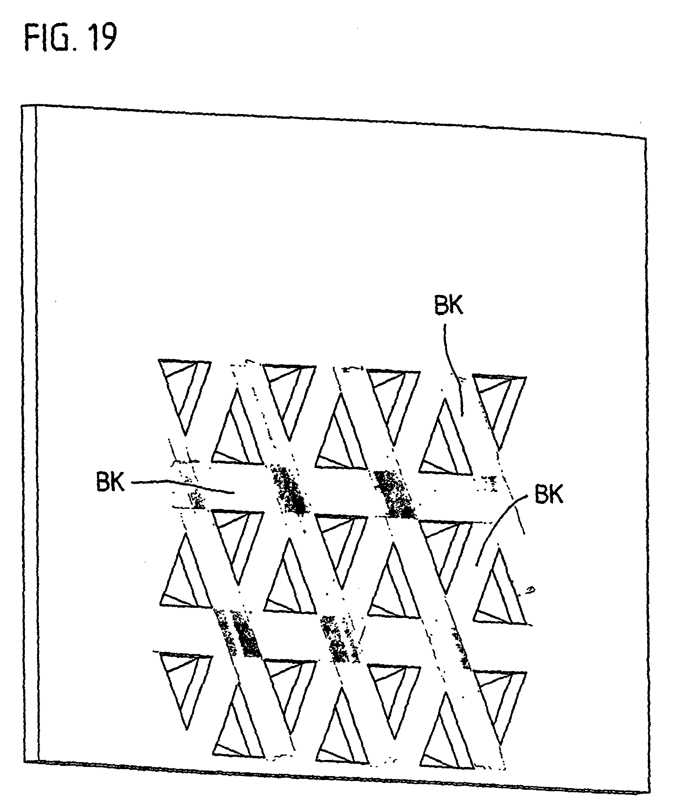

- Fig. 19: in einer perspektivischen Ansicht von hinten her, also mit invertierter Umfangsrichtungskomponente, die Rückseite der in Figur 18 gezeigten Lamelle, sodass alle Ausbeulungen nun als Senken erscheinen,

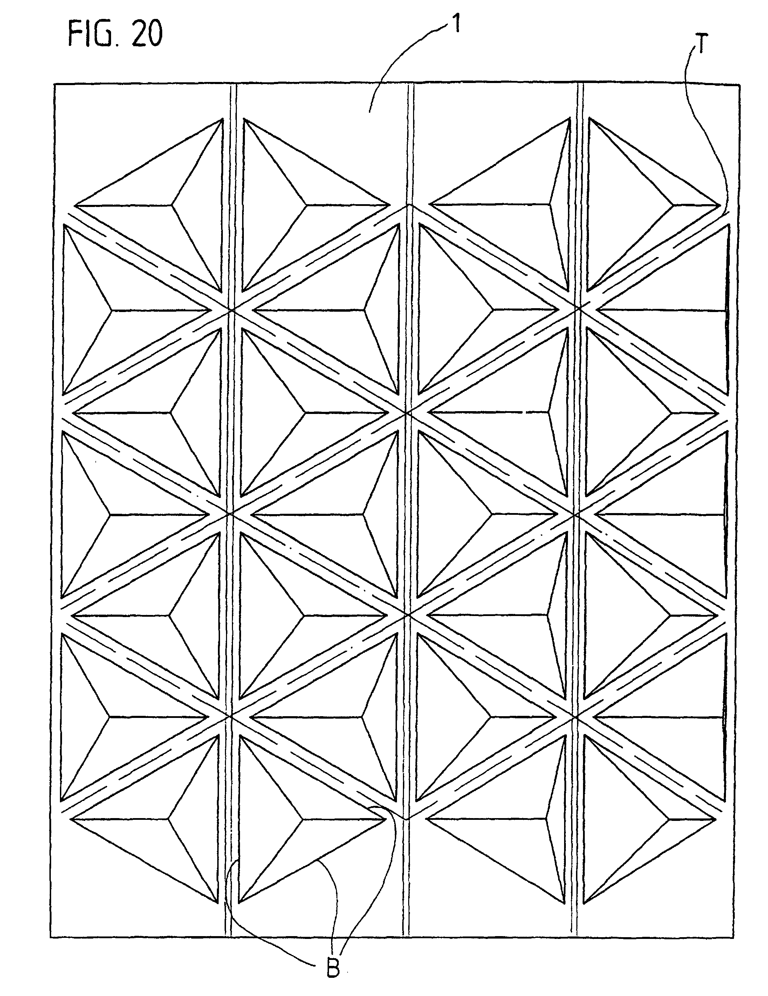

- Fig. 20: eine andere, nämlich gekantete, Lamelle mit Ausbeulungen einer einzigen Orientierung, wobei der Streifen ganz links in frontaler Sicht - entsprechend der Sicht im wesentlichen in Umfangsrichtung im damit gefertigten Reifen - erscheint,

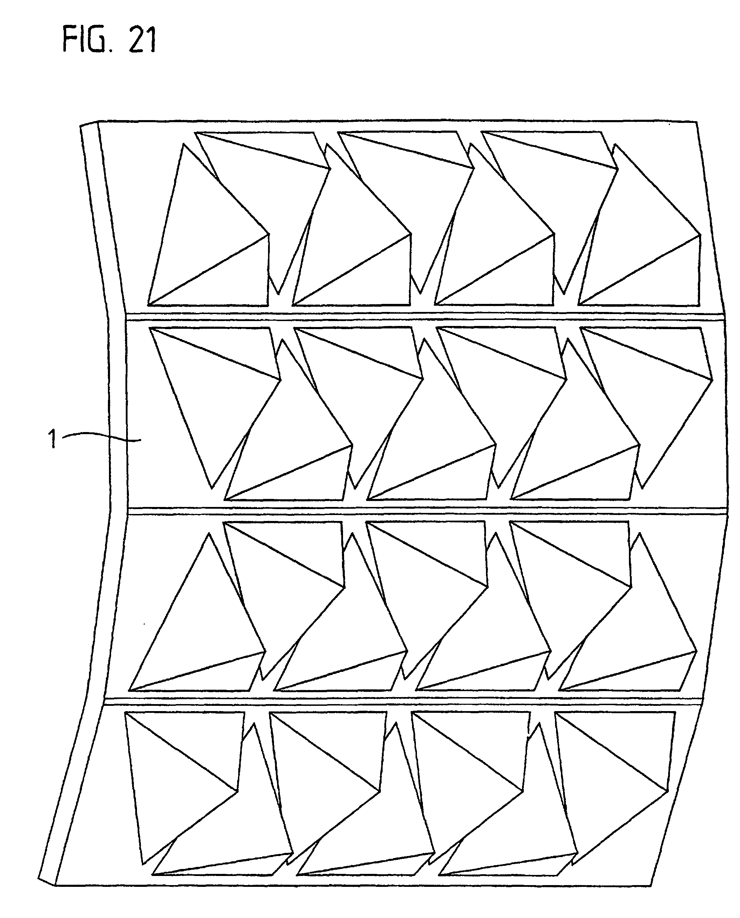

- Fig. 21: die gleiche Lamelle wie Figur 20 aus einer mehr radialen Blickrichtung,

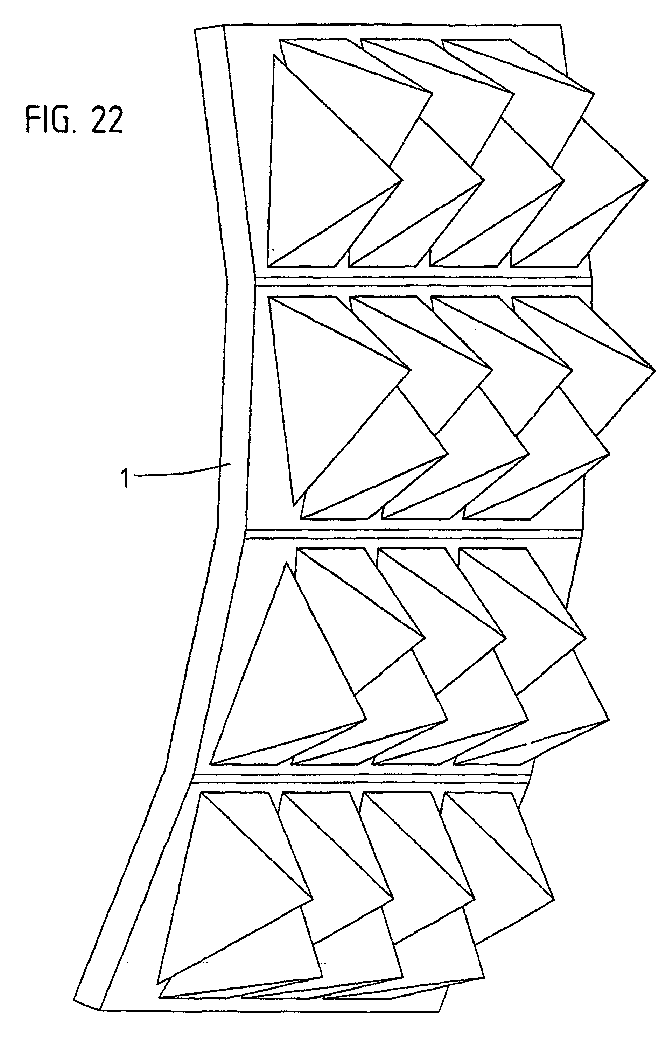

- Fig. 22: das Gleiche wie Figur 21, jedoch aus einer noch mehr radialen Blickrichtung,

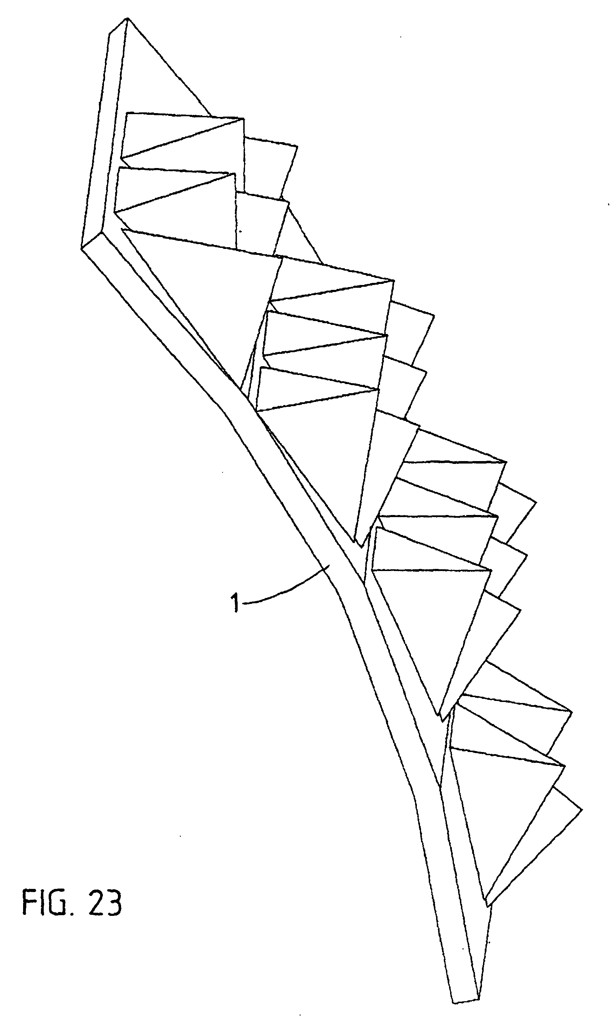

- Fig. 23: das Gleiche wie Figur 22, jedoch aus einer noch mehr radialen Blickrichtung und etwas von links,

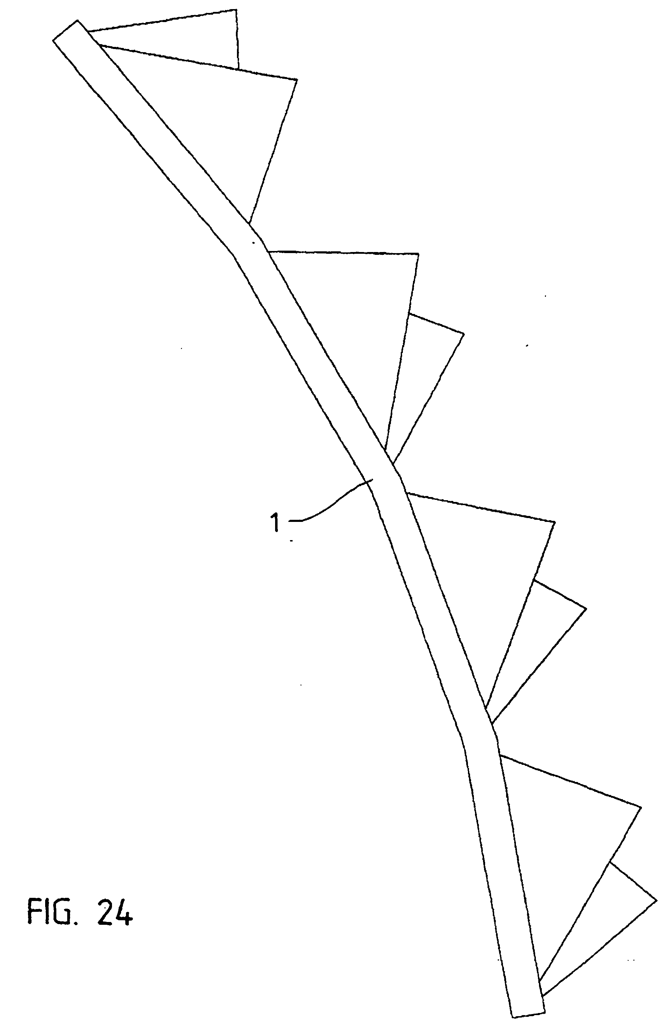

- Fig. 24: die gleiche Lamelle wie die Figuren 20 bis 23, hier in einer die Z=0-Bezugsfläche tangierenden Blickrichtung, die am fertigen Reifen zumindest in etwa der radialen Blickrichtung entsprechen sollte,

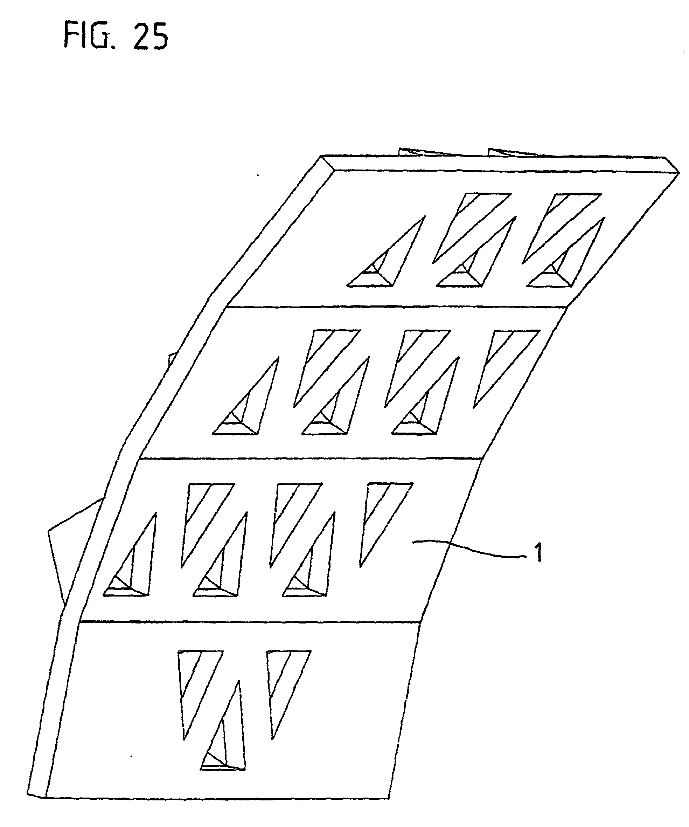

- Fig. 25: die gleiche Lamelle wie die Figuren 20 bis 24, hier auf die Rückseite schauend, sodass alle Ausbeulungen als Senken erscheinen,

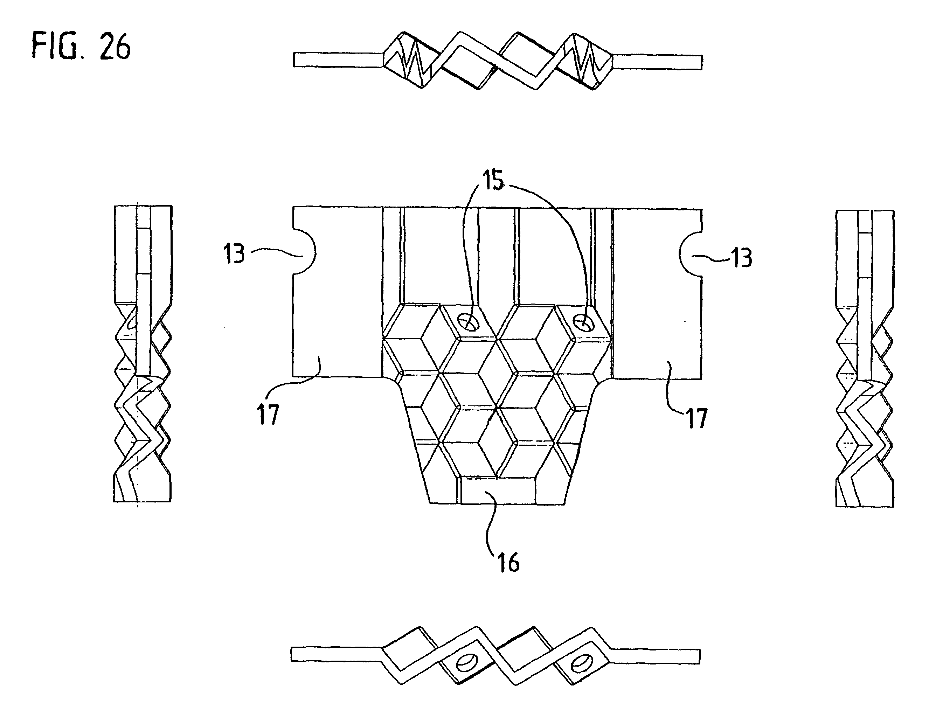

- Fig. 26: in einem maßstabsgerechten und den ISO-Zeichnungsnormen entsprechenden Übersichtsblatt mit zentraler Vorderansicht (d. h. nach Einbau der Lamelle in eine fertigen Vulkanisationsform in einer Blickrichtung etwa in Umfangsrichtung der Vulkanisationsform) links davon in einer Ansicht von rechts, rechts davon in einer Ansicht von links, darüber in einer Ansicht von unten und darunter in einer Ansicht von oben eine andere, dem Ausführungsbeispiel I (siehe insbesondere die Figuren 7 bis 13) ähnliche Lamelle, wobei jedoch das Muster der Biegelinien um 30° gedreht ist,

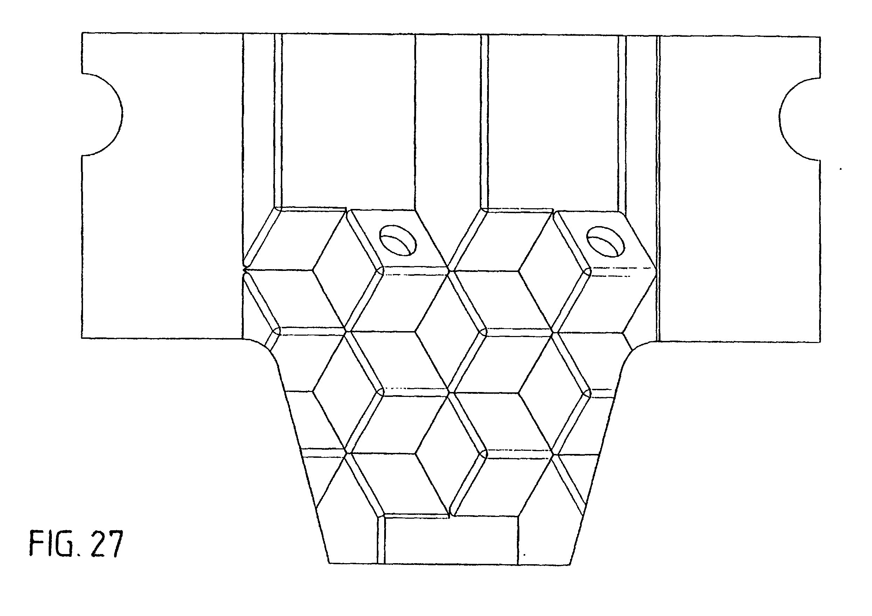

- Fig. 27: in einem größeren Maßstabe alleine die zentrale Vorderansicht aus Fig. 26,

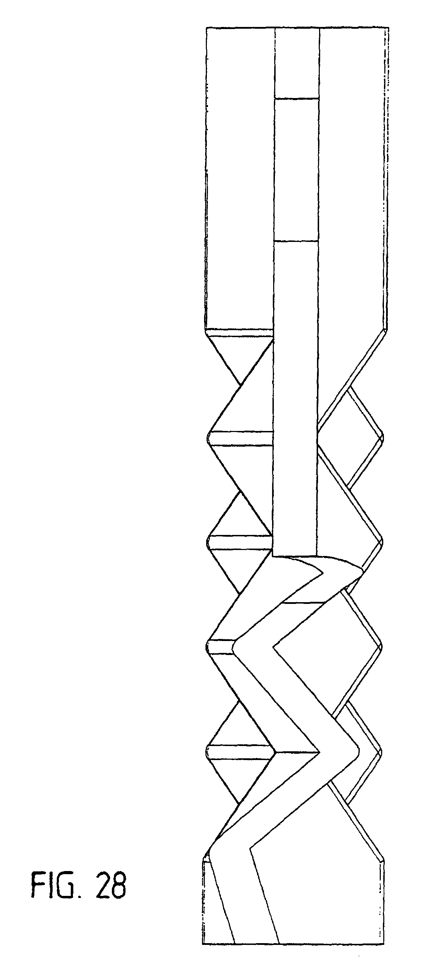

- Fig. 28: im selben Maßstabe wie Figur 27 alleine die Ansicht von links,

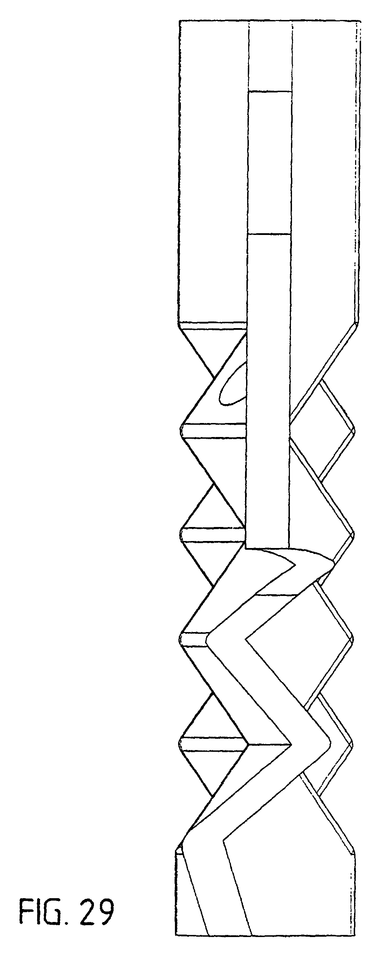

- Fig. 29: im selben Maßstabe wie Figur 27 alleine die Ansicht von rechts,

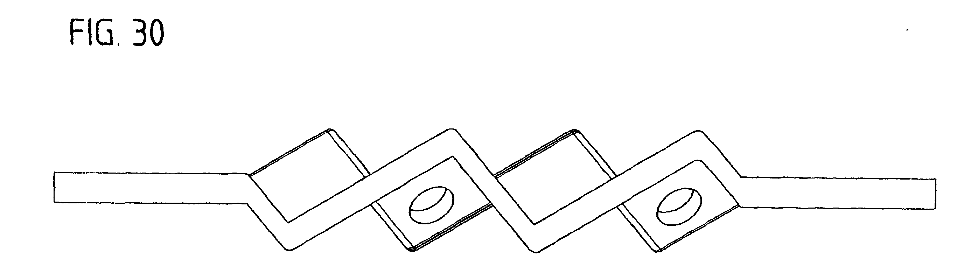

- Fig. 30: im selben Maßstabe wie Figur 27 alleine die Ansicht von oben,

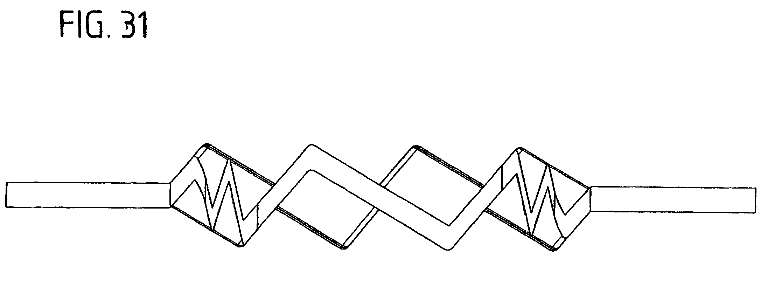

- Fig. 31: im selben Maßstabe wie Figur 27 alleine die Ansicht von unten,

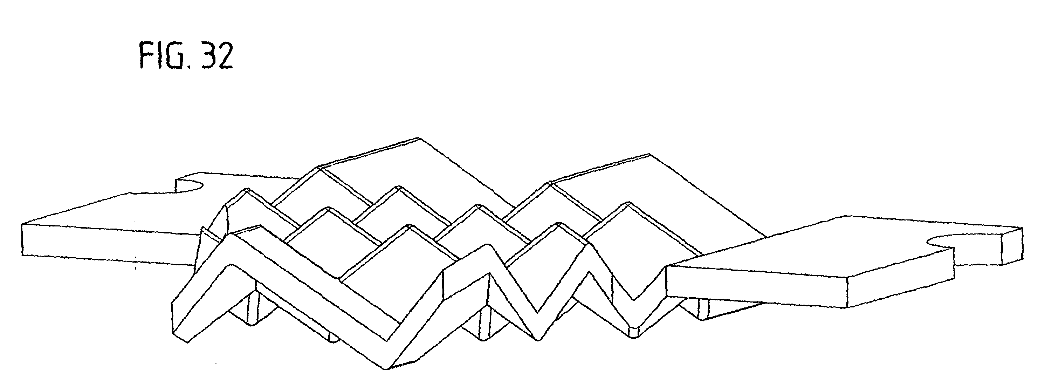

- Fig. 32: im selben Maßstabe wie Figur 27 alleine eine schräge Ansicht im wesentlichen von unten, jedoch auch deutlich von rechts und ganz leicht von vorne,

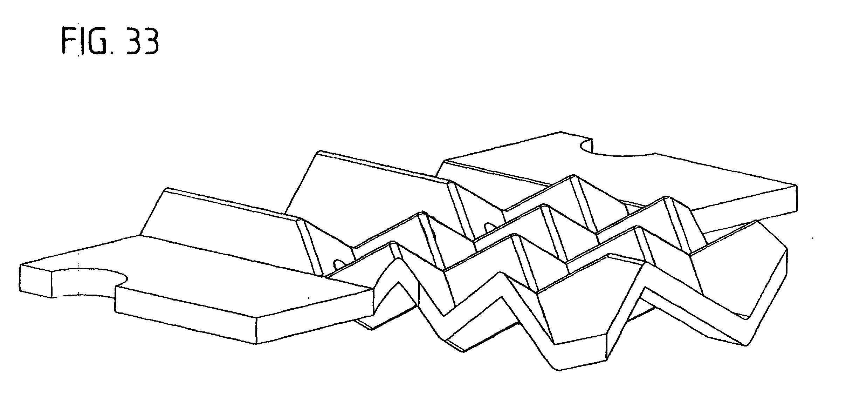

- Fig. 33: im selben Maßstabe wie Figur 27 alleine eine schräge Ansicht-im wesentlichen von unten, jedoch-auch deutlich von rechts und ganz leicht von vorne,

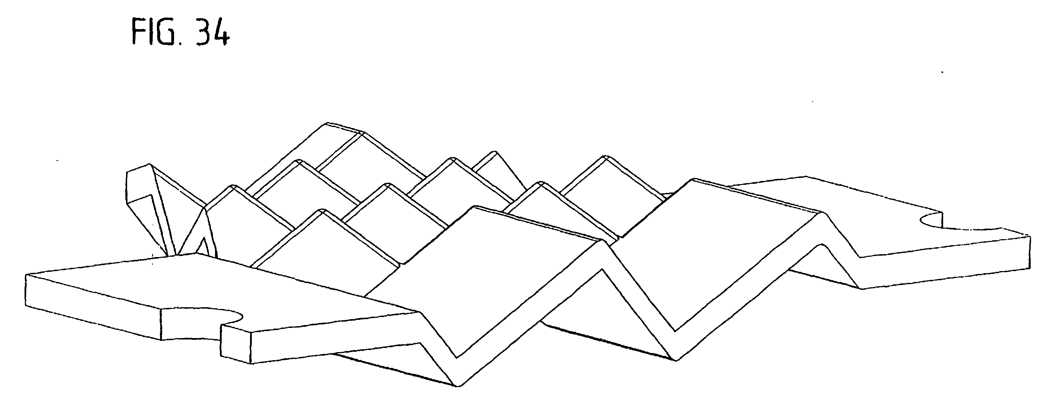

- Fig. 34: im selben Maßstabe wie Figur 27 alleine eine schräge Ansicht im wesentlichen von oben und von links,

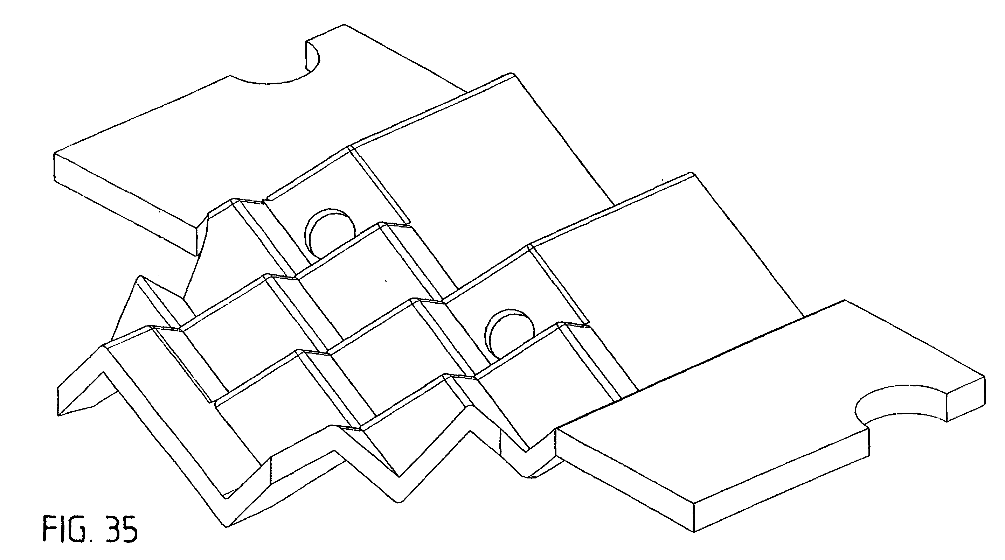

- Fig. 35: im selben Maßstabe wie Figur 27 eine schräge Ansicht ähnlich Figur 32, jedoch weiter von vorne,

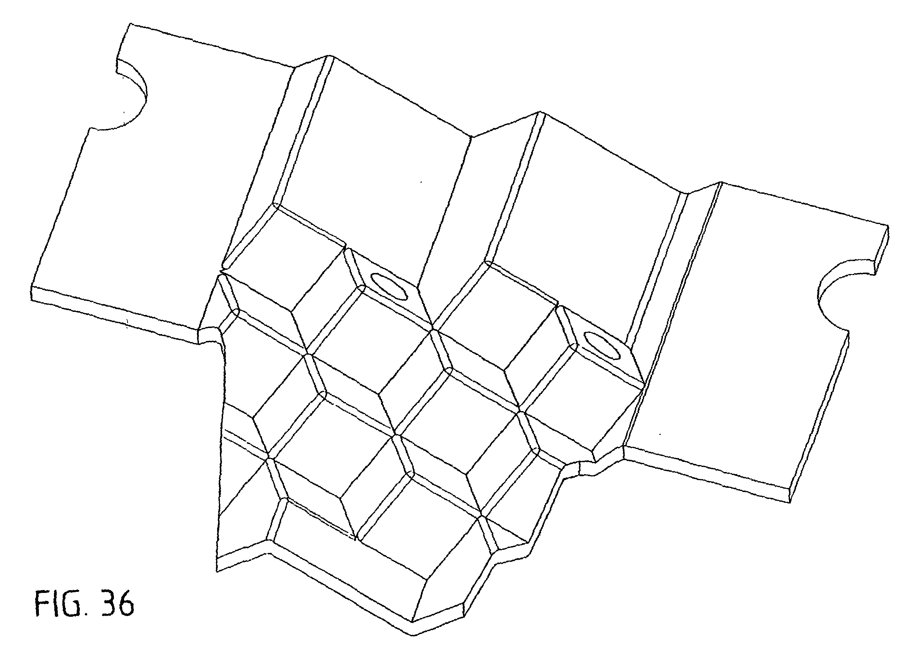

- Fig. 36: im selben Maßstabe wie Figur 27 eine schräge Ansicht ähnlich Figur 35, jedoch noch weiter von vorne und

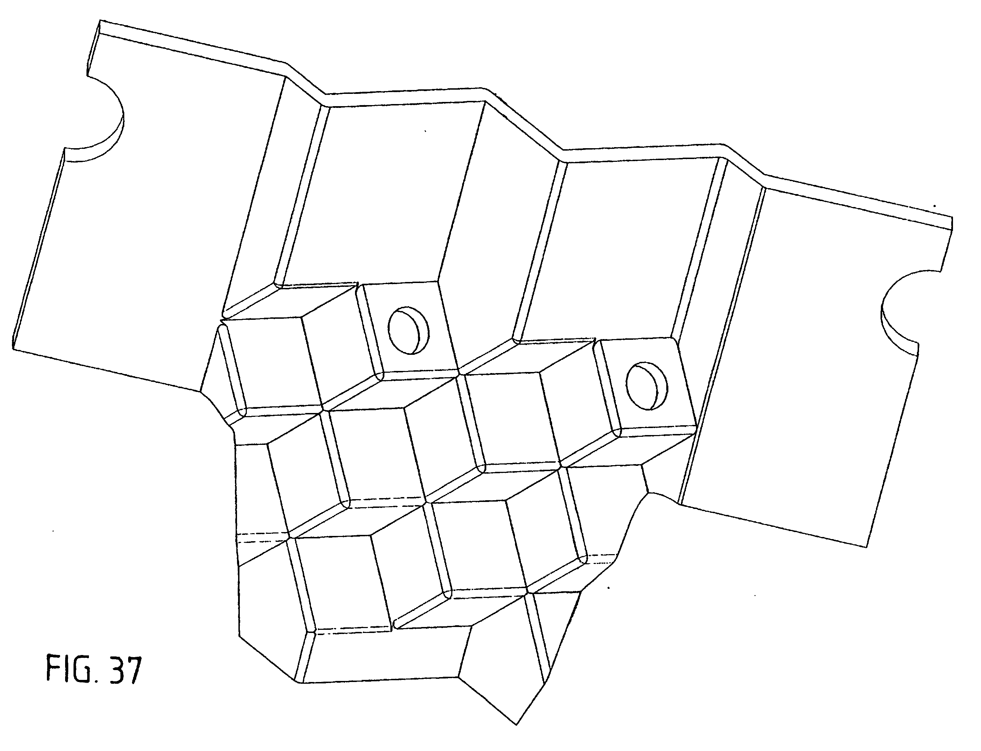

- Fig. 37: ähnlich wie Figur 27 und im selben Maßstabe eine letzte Ansicht dieser Lamelle, jedoch leicht schräg von links und von oben.

**Figur 1** zeigt in perspektivischer Ansicht einen erfindungsgemäßen Fahrzeugreifen 3. Das ausschnittsweise dargestellte Profil der Lauffläche L ist drehsinngebunden infolge einer zur Zenitumfangslinie achsensymmetrischen Pfeilung der Querrillen 6. Axial ist dieses beispielhafte Profil durch zwei breite Umfangsrillen 7 und fünf enge Umfangsrillen 8 gegliedert. Somit liegt die Gesamtheit aller Laufflächenpositive in Form von Klötzen 9 vor, von denen ein jeder seitlich von Umfangsrillen 7 bzw. 8 und vorne und hinten durch je eine Querrille 6 begrenzt wird.

Zur Gesamtheit der Negative gehören neben den besagten Querrillen 6 und Umfangsrillen 7 und 8 noch Einschnitte 10. Bei dieser nur beispielhaften Gestaltung durchschneiden je zwei dieser Einschnitte 10 einen jeden Klotz 9 und zwar parallel zu den Querrillen 6. Natürlich kann bei Verwendung einer Profilschrittfolge mit größerem Profilschrittlängenverhältnis zwischen der längsten und der kürzesten Schrittlänge auch eine größere Anzahl von Einschnitten in den längeren Klötzen als in den kürzeren Klötzen zweckmäßig sein.

Vorliegende Erfindung betrifft die Einschnitte 10, dabei aber nicht primär die in der - hier gezeigten - Draufsicht sichtbare Gestalt dieser Einschnitte 10, sondern deren Verlauf in die Tiefe des Profiles herein. Um das Erfindungswesentliche zu zeigen, ist ein kleiner Bereich dieser Profildraufsicht als Einzelheit markiert; dieser kleine Bereich wird in den folgenden Figuren 2 bis 6 näher dargestellt.

**Figur 2** zeigt in einer perspektivischen Ansicht von weit oben und leicht rechts einen vergrößerten Ausschnitt aus dem Laufstreifen des Reifens gemäß Fig. 1, wobei ein links befindlicher Klotzbereich abgeschnitten wurde, um eine Ansicht auf eine Flankenfläche eines erfindungsgemäßen Einschnittes mit alternierender Anordnung von Erhebungen und Senken frei zu legen.

Um eine saubere Begrenzung der Abschnittflächen links und rechts an den Umfangsrillen 7 und 8 zu bekommen, ist die zur Reifenperipherie parallele Schnittebene etwas höher gesetzt als der tiefste Bereich des Einschnittgrundes; dieser tiefste Bereich ist in gestrichelter Linie nur in der Figur 6 mit angegeben, um die übrigen Figuren nicht zu überfrachten. Da bei diesem Ausführungsbeispiel die vorzugsweise pyramidenartigen - jedenfalls auf einem Dreiecksgrundriss basierenden - Ausbeulungen nicht bis in den ansonsten nicht dargestellten tiefen Einschnittbereich hereinreichen, schmälert diese Darstellungstechnik nicht die Offenbarung des Erfindungswesentlichen.

Die Figuren 3 bis 5 zeigen im gleichen Maßstabe den gleichen Ausschnitt wie Figur 2, jedoch aus jeweils anderem Blickwinkel, und zwar:
**Figur 3** von weniger weit oben und weiter rechts als Figur 2,
**Figur 4** gegenüber Figur 3 von noch weniger weit oben,
**Figur 5** gegenüber Figur 2 von weniger weit oben und schräg von links statt leicht von rechts.
**Figur 6** zeigt das Gleiche wie Figur 5, jedoch mit strichpunktierter Angabe der Teilungslinien T. Diese Teilungslinien T - und nur diese - liegen innerhalb der Z=0-Bezugsfläche.

Zur Illustration des Wortes "Z=0-Bezugsfläche" ist im gleichartigen Einschnitt 10 des rechts neben dem durchschnittenen Klotze 9a angeordneten Klotzes 9b dessen Z=0-Bezugsfläche dargestellt: Sie wird von der radial verlaufenden y-Achse und der x-Achse aufgespannt. Dabei durchläuft die x-Achse das linke und das rechte Ende des Einschnittes, verläuft also in etwa in der axialen Richtung des Reifens.

Senkrecht zu dieser x-y-Ebene, also senkrecht zur Z=0-Bezugsfläche, ist die Koordinatenachse z angeordnet. Liefe die x-Achse exakt in der Axialen und die y-Achse exakt in der Radialen, so liefe die z-Achse exakt in der Reifenumfangsrichtung. Aus Geräuschgründen ist es aber bekanntlich zweckmäßig, die Einschnitte um Winkel zwischen 5° und 40° aus der exakt Axialen herauszudrehen; die schallanregenden Ereignisse Einschnitt-Einlauf und Einschnitt-Auslauf erfolgen dann nicht ganz so abrupt. Darum sind auch hier die Einschnitte zur Axialen leicht geneigt.

Die y-Koordinate ist hier exakt in die Radiale des Reifens gelegt. Sie dürfte aber auch in an sich bekannter Weise demgegenüber bis etwa 20° geneigt werden, um eine Griffigkeits-Spezialisierung zwischen Vortrieb oder Verzögerung herbeizuführen.

Es gibt zwei verschiedene Teilungslängen; wo nichts besonderes gesagt ist, ist mit der Teilungslänge t der Abstand von Knoten zu Knoten entlang der jeweiligen Teilungslinie T gemeint, wie in Figur 6 eingezeichnet. Nur dort, wo von der Periodizität entlang der Winkelhalbierenden die Rede ist, ist mit der Teilungslänge th die Länge der jeweiligen Winkelhalbierenden innerhalb einer dreiecksförmigen Pyramidengrundfläche gemeint. Wenn diese Pyramidengrundfläche - wie bevorzugt und in allen Figuren dargestellt - exakt ein gleichseitiges Dreieck ist, dann beträgt sie (th) die halbe Quadratwurzel aus 3 mal der Knotenteilungslänge (t).

In den Figuren 2 bis 6 erkennt man, dass die Pyramide ganz links und radial außen (also auf dem Blatte ganz links oben) eine Senke ist; das zugehörige Bezugszeichen 5 ist - wie nahezu alle anderen Bezugszeichen auch - nur in der Figur 6 eingetragen, um in den Figuren 2 bis 5 den realistischen perspektivischen Eindruck möglichst nicht durch Bezugszeichen und Bezugslinien zu stören. Bei ihrem punktförmigem Extremum handelt es sich also um einen Krater K. In der gleichen Pyramidenzeile sind auch die anderen Krater K markiert.

Abgesehen vom Lamellenrand grenzt an jede Senke 5 entlang jeder ihrer drei Pyramiden-Basislinien (die abgesehen von der halben Materialstärke mit den Teilungslinie T zusammenfallen und deshalb selbst in dieser Vergrößerung nicht aufgelöst werden können) eine Erhebung 4 mit je einem - ebenfalls punktförmigen - Extremum, einem Gipfel G. Und umgekehrt grenzt - natürlich wiederum abgesehen vom Lamellenrand - an jede Erhebung 4 entlang jeder ihrer drei Pyramiden-Basislinien eine Senke 5 mit je einem - punktförmigen - Extremum, einem Krater K.

Das Lesen jeder der Figuren 2 bis 5 ist so gedacht, dass die reich beschriftete Figur 6 daneben gelegt wird.

Die gezeigte Anhebung des Einschnittgrundes am linken und rechten Rande eines jeden der hier gezeigten Einschnitte ist nicht erforderlich. Nach neuester Erkenntnis wird sogar vorzugsweise von solchen Grundanhebungen abgesehen, weil sie aufgrund der guten Verzahnungswirkung der erfindungsgemäß ausgebeulten Einschnittflanken gegeneinander für die angestrebten guten Handlingseigenschaften des Reifens nicht erforderlich erscheinen und für die Belastung der die Einschnitte herstellenden Lamellen nachteilig sind, da die Lamellen so weniger steif an ihren Rändern gefesselt sind.

Die **Figuren 7 bis 13** zeigen - noch zugehörig zum Ausführungsbeispiel I - die Lamelle 1, mittels derer die Einschnitte 10 in den vorherigen Figuren 2 bis 6 hergestellt wurden. Die Lamelle ist dabei in einem größeren Maßstabe dargestellt als der Einschnitt in den Figuren 2 bis 6, nämlich in der Figur 7 im Maßstabe 1:8. Bei den übrigen Figuren wurde der Maßstab und die Blattausrichtung jeweils so gewählt, dass das DIN A4-Format des Zeichenblattes optimal ausgenutzt wurde.

In den Figuren 8 und 11 bis 13 ist in dünner durchgezogener Linie 11 die Peripherie des betreffenden spurförmigen Ausschnittes des Vulkanisationsform 2 angedeutet, in die die Lamelle 1 einzusetzen ist. In der Figur 7 hingegen, die zeichnungsnormengerecht einen Ausschnitt aus einer erfindungsgemäßen Vulkanisationsform 2 im Schnitt zeigt, erscheint diese Linie als - dick durchgezogene - Körperkante. Die Wurzel 12, mit der die Lamelle 1 innerhalb der Vulkanisationsform 2 verankert ist, erscheint also in der Figur 7 nur mit gestrichelter Umrisskontur, weil sie verborgen im Material der Vulkanisationsform.

Die gezeigten halbkreisförmige Aussparungen 13 erhöhen in an sich bekannter Weise die Ausrissfestigkeit. Weil der Formöffnungs-Widerstand infolge der Ausbeulungen hoch ist, kann sich die Anordnung weiterer Durchdringungsbohrungen 14 zur sicheren Vermeidung eines Lamellenausrisses empfehlen; um die Übersichtlichkeit der anderen Figuren nicht zu beeinträchtigen, sind solche Bohrungen 14 aber nur in Figur 7 dargestellt.

Radial außen am in die Kautschukmischung des Laufstreifens eindringenden Lamellenbereich befinden sich Entlüftungsdurchbrüche 15, die in an sich bekannter Weise dazu dienen, die Anzahl der erforderlichen, die Vulkanisationsform nach radial außen durchdringenden Entlüftungsbohrungen zu begrenzen.

**Figur 7** zeigt in der Draufsicht - entsprechend einer Sicht senkrecht zur x-y-Ebene, also in z-Richtung, und damit etwa in der Umfangsrichtung des herzustellenden Reifens - die erfindungsgemäße Lamelle 1. Sie ist in einem radial inneren Bereich 16 sowie in beiden axialen Randbereichen 17 glatt ausgebildet, also ohne Ausbeulungen. Im davon eingeschlossenen Bereich befinden sich Ausbeulungen der erfindungsgemäßen Art.

**Figur 8** zeigt das Gleiche wie Figur 7, verzichtet jedoch - um das Erfindungswesentliche stärker hervortreten zu lassen - auf alle Schraffuren, die Durchdringungsbohrungen 14, die bislang behandelten Bezugszeichen, gibt aber strichpunktiert die Teilungslinien T an.

In diesem großen Maßstabe konnte das Détail aufgelöst werden, dass sich auf der Außenseite von Biegungen ein Biegeradius mindestens gleich der Blechwandstärke einstellt. Auf der Innenseite ist der Biegeradius wesentlich kleiner, so klein, dass er auch in diesem Maßstabe in der mittels CAD erstellten Zeichnung noch nicht in eine Doppellinie aufgelöst wird.

Also sind in diesen Figuren 7, 8, 11, 12 und 13 die vorspringenden Kanten als Doppellinie zu erkennen, die zurückfliehenden, versenkten hingegen als einfache Linie. Eine Benennung der Gipfel und Krater erscheint deshalb entbehrlich. In den Figuren 9 und 10 liefert dies allerdings keine ganz eindeutige Zuordnung, weil teilweise Linien aufgrund des sehr flachen Blickwinkels ineinander laufen; um auch dort klar zu stellen, was erhoben und was versenkt ist, sind dort mittels Bezugszeichen einige Gipfel G und einige Krater K gekennzeichnet.

**Figur 9** zeigt die Lamelle 1 in einer Stirnansicht und zwar hier entsprechend einer Sicht in der radialen Richtung von innen her nach radial außen gegen die Kavernenwandung der erfindungsgemäßen Vulkanisationsform. Die Gipfel G erscheinen auf dem Zeichenblatt oben.

Dabei sind die Gipfel G1, G2 und G3 besonders gekennzeichnet, um die Analogie zur Draufsicht gemäß Figur 7, wo die gleichen Gipel die gleichen Bezugszeichen tragen, zu verdeutlichen. Unten auf dem Zeichenblatte sind die Krater K zu erkennen.

**Figur 10** zeigt in einer zur Figur 9 senkrechten Stirnansicht - entsprechend etwa einer Sicht in axialer Richtung von links nach rechts der erfindungsgemäßen Vulkanisationsform - die gleiche Lamelle im gleichen Maßstabe wie die Figuren 7 bis 9. Figur 10 zeigt den Unterschied zu den zickzack- oder wellenförmigen Verläufen von Ansichtsumrissen oder Schnittlinien von solchermaßen - vorbekannten - ausgebeulten Lamellen, dass sie im Grundriss auf viereckigen Elementar-Zellen (Rauten, Rechtecke, Quadrate) in der Z=0-Bezugsfläche basieren: Während bei den vorbekannten Ausbeulungen die Achsensymmetrie in jeder beliebigen Schnittrichtung durch ein Extremum besteht, erscheinen bei der Erfindung im Allgemeinen die Halbwellen nicht achsensymmetrisch zur Senkrechten zur Z=0-Bezugsfläche durch ihr Extremum;
bei der Erfindung gibt es nur drei Schnittrichtungen, in denen eine solche Achsensymmetrie doch zu beobachten ist, nämlich in den drei Winkelhalbierenden der drei Scharen von Teilungslinien, in diesem Beispiel also die Radiale (siehe Figur 9), die um 120° demgegenüber nach links und die um 120° demgegenüber nach rechts geneigte Achse.

**Figur 11** zeigt die gleiche Lamelle in einer perspektivischen Ansicht nahe dem Blickwinkel der Figur 7, jedoch nicht genau in Umfangsrichtung des herzustellenden Reifens geguckt, sondern leicht von radial innen nach radial außen und leicht von links nach rechts. Es sind kaum Bezugszeichen gesetzt und abgesehen von der Umrisslinie 11 der Vulkanisationsform 2 sind auch keinerlei Hilfslinien angegeben, um so den Blick ganz auf die räumliche Gestalt der Lamelle zu konzentrieren.

**Figur 12** zeigt das Gleiche wie Figur 11, jedoch mit strichpunktierter Angabe der Teilungslinien T.

**Figur 13** zeigt in Ähnlichkeit zur Figur 11 die gleiche Lamelle 1 in einer perspektivischen Ansicht, jedoch stärker nach radial außen und nunmehr in einem flachen Winkel von rechts nach links blickend. Dadurch geraten die Krater in den Blickschatten der Erhebungen. Analog der Figur 11 ist wiederum in dem Lamellenbereich in der Bildmitte, der die Erfindung charakterisiert, auf den Zusatz von Teilungslinien und Bezugszeichen verzichtet.

Nachdem das erste Ausführungsbeispiel wegen der komplizierten räumlichen Gestalt besonders ausführlich illustriert wurde, nun zum Ausführungsbeispiel II:

**Figur 14** zeigt in der Draufsicht - also in einer Blickrichtung entsprechend etwa der Umfangsrichtung des damit zu fertigenden Reifens - eine andere erfindungsgemäße Lamelle 1, die ebenfalls alternierend Erhebungen 4 und Senken 5 aufweist, bei der jedoch abweichend von den vorherigen Figuren zwischen allen benachbarten Ausbeulungen Stege S einer Breite b belassen sind, die sich unverformt im wesentlichen in der Z=0-Bezugsebene erstrecken. Auch alle folgenden Figuren zeigen letztgenanntes Merkmal.

Festgehalten wurde bei diesem Ausführungsbeispiel daran, dass sowohl die Erhebungen 4 als auch die Senken 5 pyramidenförmig gestaltet sind; um das Wesentliche deutlich hervortreten zu lassen, wurde hier sogar auf die in realiter erforderliche Verrundung der Kanten, insbesondere auch der vorspringenden Kanten verzichtet.

Es wäre übrigens auch möglich, anstelle der gezeigten vollständiger Pyramiden mit ihren spitzen Gipfeln G und spitzen Kratern K für die Erhebungen und/oder für die Senken Pyramidenstümpfe zu wählen, sodass die ansonsten punktförmigen Gipfel also zu einem flächigen dreieckigen Gipelplateau - wie bei einem Tafelberg in der Geographie - werden bzw. die ansonsten punktförmigen Krater analog zu flächigen dreieckigen Talsohlen. Die Gipfel- und Kraterpunkte erschienen dann also nicht mehr real körperlich, sondern nur noch als Fluchtpunkte der dann trapezförmigen Pyramiden-Mantelflächen.

Aus diesem Grunde ist in den Merkmalen b und c des Anspruches 1 und c und d des Anspruches 2 nicht gesagt, dass die jeweilige Ausbeulung ein punktförmiges Extremum "habe" sondern nur, dass ihr eines zugeordnet ist, was auch die Zuordnung nur als Fluchtpunkt miterfassen soll.

Eine solche Ausführung diente fast ähnlich gut der Verzahnung der Einschnittflanken gegeneinander, hätte aber den Vorzug, die Entformung des Reifens aus der Form weniger zu behindern. Auch solche Ausführungen sollen zum Schutzumfang der Erfindung gehören, weil auch diese von dem grundsätzlichen Erfindungsgedanken Gebrauch machen, in der Z=0-Bezugsfläche ein Fachwerk aufzubauen basierend auf der Elementareinheit von Dreiecken, nicht von Vierecken.

Zurück zur konkreten Figur 14:

Die Erhebungen 4 sind hier etwas größer gewählt als die Senken 5, um zu zeigen, dass die Z=0-Bezugsfläche, innerhalb derer die strichpunktiert gezeichneten Teilungslinien T und die Stege S zwischen den Ausbeulungen liegen, sich nicht genau mittig zwischen der Gipfelhöhe und der Kratertiefe befinden zu brauchen. Darum befinden sich die Teilungslinien T nicht genau mittig in den als Fachwerk-Stäbe dienenden Stegen S.

Selbst bei gleichmäßig großer Pyramiden-Ausdehnung nach vorne und nach hinten ergäbe sich dieser Eindruck, sobald die Lamellenwandstärke nicht mehr gegenüber der Teilungslänge t vernachlässigbar klein ist.

Die **Figuren 15 bis 17** zeigen die gleiche Lamelle 1 wie Figur 14, jedoch perspektivisch aus verschiedenen Blickwinkeln und ohne Angabe der Teilungslinien T und zwar Figur 15 aus einem Blickwinkel leicht von radial außen und leicht von links, Figur 16 aus einem Blickwinkel deutlich von radial innen und leicht von links und Figur 17 aus einem Blickwinkel ganz leicht von radial innen her und leicht von rechts.

In diesem Ausführungsbeispiel II - wie auch in den beiden folgenden - ist keine Lamellengrundanhebung vorgesehen. Die jeweils auf dem oberen Blattbereich gezeigte Lamellenwurzel ist ohne die typischen Befestigungsdétails gezeigt, die im Ausführungsbeispiel I hinreichend zitiert sind, um nicht vom Erfindungswesentlichen abzulenken.

Aus diesem Ausführungsbeispiel II ist ein - in den **Figuren 18 und 19** gezeigtes - Ausführungsbeispiel III abgeleitet, indem die Pyramiden wieder alle gleich groß gemacht wurden und auch die zuvor versenkten Pyramiden nunmehr zu erhabenen Pyramiden invertiert wurden; in diesem Ausführungsbeispiel gibt es also nur aus der Z=0-Bezugsfläche herausragende Pyramiden. Im Vergleich dazu erscheinen die ehemals etwa mittigen Stege S nunmehr als linienförmige Senken.

Figur 18 zeigt diese abgewandelte Lamelle 1 in einer Perspektive schräg von vorne, Figur 19 von hinten, sodass dort alle Pyramiden als Senken erscheinen. Dementsprechend erscheinen in Figur 19 alle das erfindungsgemäße Dreieck-Fachwerk bildenden Stege als Bergkämme BK.

Die **Figuren 20 bis 25** schließlich sind einem Ausführungsbeispiel IV gewidmet. Unter Beibehaltung des - nicht erforderlichen aber dabei bevorzugten - Merkmales aus dem Beispiel III, dass nämlich alle Ausbeulungen gleich orientiert sind, ist hier keine im wesentlichen ebene sondern eine gekantete Lamelle 1 gezeigt, wobei in der Figur 20 der Streifen ganz links in frontaler Sicht - entsprechend der Sicht im wesentlichen in Umfangsrichtung im damit gefertigten Reifen - erscheint.

Die Z=0-Bezugsfläche, die die Teilungslinien T enthält (die zecks Übersichtlichkeit nur in Figur 20 dargestellt sind) ist also nicht eben, sondern entlang der Teilungslinien einer der drei Scharen abgekantet. Diese Abkantungen dienen der räumlichen Stabilisierung des ansonsten im wesentlichen nur flächig stabilen Fachwerkes der Stege S. Die so erzeugten Kanten sollten etwa in der Radialen der mit diesen Lamellen auszurüstenden Vulkanisationsform und des damit herzustellenden Reifens liegen.

Die Basislinien B der Pyramiden liegen hier wiederum symmetrisch zur jeweiligen Teilungslinie T und begrenzen die Stege S seitlich.

**Figur 21** zeigt die gleiche Lamelle 1 wie Figur 20 aus einer mehr radialen Blickrichtung, **Figur 22** aus einer noch mehr radialen Blickrichtung, **Figur 23** aus einer noch mehr radialen Blickrichtung als Figur 22 und etwas von links.

**Figur 24** zeigt die gleiche Lamelle 1 wie die Figuren 20 bis 23, hier in einer die Z=0-Bezugsfläche tangierenden Blickrichtung, die am fertigen Reifen zumindest in etwa der radialen Blickrichtung entsprechen sollte.

**Figur 25** schließlich zeigt die gleiche Lamelle 1 wie die Figuren 20 bis 24, hier auf die Rückseite schauend, sodass alle Ausbeulungen als Senken erscheinen.

Es können sich mehrere solcher - vorzugsweise, wie gezeigt, unstetig - gekrümmter Bereiche aneinander anschließen, auch in wechselnder Krümmungsorientierung, sodass sich in der bezüglich des zu fertigenden Reifens radialen Sicht ein Zickzack- oder wellenförmiger Verlauf ergibt.

Vorzugsweise weisen die Ausbeulungen jeweils aus der Krümmungsaußenseite heraus, wie hier dargestellt. Im Bereich von Wendungen jedoch, wo kaum eine Krümmung vorliegt, können mit Vorteil Ausbeulungen in beide Umfangsorientierungen des zu fertigenden Reifens angeordnet werden, also Erhebungen und Senken.

Es ist nicht erforderlich, dass eine Teilunglslinie im fertigen Reifen genau axial verläuft, wie in allen bisherigen Figuren gezeigt, oder genau radial, wie in den Figuren 26 bis 37 gezeigt. Vielmehr kann es für eine über dem Profiltiefenverlust infolge Abrieb stetigere Wirkung von Vorteil sein, eine schiefe Ausrichtung, beispielsweise um 11°, zu wählen.

Während die Lamelle I (Figuren 7 - 13) in den Bereichen 16 und 17 eben ist, ist die Lamelle V gemäß den Figuren 26 bis 37 in diesen Bereichen 1-dimensional (nämlich entlang radialer Linien) gefaltet; in den übrigen Bereichen ist sie - wie im Beispiel I - 3-dimensional gefaltet. Im übrigen ist Lamelle V analog gestaltet wie Lamelle I, also mit halbkreisförmigen Aussparungen 13 zur Verwurzelung, Durchbrüchen 15 zur Entlüftung und Verrundung (Doppellinie) vorspringender Kanten.

Der Schutzumfang der Erfindung soll nicht auf die Ausführungsbeispiele beschränkt sein, von denen die Beispiele IV und V für die besten gehalten werden. Vielmehr gehören auch alle Abwandlungen dazu insoweit sie von dem für diese Erfindung besonders Wesentlichen Gebrauch machen, nämlich aus einer Z=0-Bezugsfläche einer Lamelle solche vereinzelte Ausbeulungen in einer oder beiden Orientierungen herausragen zu lassen, die in der Z=0-Bezugsfläche jeweils eine Grundfläche markieren, die alle im wesentlichen dreieckförmig sind und in ihren Umrissen fluchtend ausgerichtet sind, sodass die auf oder zwischen den Basislinien dieser Ausbeulungen befindlichen Teilungslinien ein zumindest flächig stabiles Fachwerk aus aneinander gereihten Dreiecken bilden.

Die folgende Bezugszeichenliste ist Bestandteil der Beschreibung.

### Bezugszeichenliste:

- 1: Lamelle
- 2: Vulkanisationsform mit Lamellen 1
- 3: Fahrzeugreifen, hergestellt in 2
- 4: Erhebungen in 1
- 5: Senken in 1
- 6: Querrillen des Profiles der Lauffläche L des Reifens 3
- 7: breite Umfangsrillen der Lauffläche L des Reifens 3
- 8: schmale Umfangsrillen der Lauffläche L des Reifens 3
- 9: Klötze, als Positive der Lauffläche L des Reifens 3
9a linker Klotz aus dem in den Figuren 2 bis 6 betrachteten Lauflächenausschnitt
9b rechter Klotz aus dem in den Figuren 2 bis 6 betrachteten Lauflächenausschnitt
- 10: Einschnitt in L von 3, hergestellt von 1
- 11: Peripherie der Kaverne der Vulkanisationsform 2
- 12: Wurzel der Lamelle 1, mit der sie zwecks Verankerung in 2 hereinragt
- 13: halbkreisförmige Aussparungen in 12 zur Verstärkung der Verankerung
- **14**: Durchdringungsbohrungen in 12 zur Verstärkung der Verankerung
- 15: Entlüftungsdurchbrüche am radial äußeren Rande des freien Bereiches von 1
- 16: glatter radial innerer Bereich von 1
- 17: glatter axial äußerer Bereich von 1
- b: Breite der ein Stabfachwerk bildenden Stege S
- t: Kantenlänge der kleinsten Dreiecke, die durch drei sich kreuzende Teilungslinien T gebildet werden = Abstand von Knotenmittelpunkt zu Knotenmittelpunkt, häufig auch einfach kurz als Teilungslänge bezeichnet
- th: Länge der Winkelhalbierenden in vorgenannten kleinsten Dreiecken, also von einem Knoten zur Mitte der gegenüberliegenden Seite = kleinste mögliche Teilungslänge der Periodizität in der Abfolge von Erhebungen und Senken (bei ++++++++)
- B: Basislinie (in den Figuren 2 bis 13 nicht benutzt, weil infolge der Stegbreite 0 praktisch zusammenfallend mit T) einer Pyramide = Schnittlinie zwischen einer Seitenfläche besagter Pyramide und besagter gedachter Grundfläche; dabei ist die Grundfläche vom Gipfel aus gesehen die tiefste bzw. vom Krater aus gesehen die höchste Fläche senkrecht zur Höhe bzw. Tiefe des Gipfels bzw. des Kraters, die ähnlich (also dreieckförmig) ist zu allen darüber bzw. darunter befindlichen parallelen Pyramidenschnittflächen
- BK: Bergkamm, linienförmige höchste Stelle einer Erhebung 4
- G: Gipfel (punktförmige höchste Stelle) einer Erhebung 4
G1 radial innerer linker Gipfel von 1 in den Figuren 7 und 9
G2 radial innerer mittlerer Gipfel von 1 in den Figuren 7 und 9
G3 radial innerer rechter Gipfel von 1 in den Figuren 7 und 9
- K: Krater (punktförmige tiefste Stelle) einer Senke 5
- L: Lauffläche des Fahrzeugreifens 3
- S: Stege der Breite b in der Umgebung von T innerhalb der Z=0-Bezugsfläche, gebildet durch Beabstandung der Ausbeulungsränder (=Basislinien B im Falle der bevorzugten pyramidenförmigen Ausbeulungen) voneinander
- Sd: Stegdicke
- T: Teilungslinie
- TS: Talsohle, linienförmige tiefste Stelle in Senken 5
- Z4: Höhe der Erhebungen 4, zu messen etwa parallel zur Peripheriefläche P der Lauffläche L
- Z5: Tiefe der Senken 5, zu messen etwa parallel zur Peripheriefläche P der Lauffläche L
- Zg: Höhe der Gipfel G
- Zk: Tiefe der Krater K
- Zt: Höhe der Teilungslinien T, zur Definition der Z=0-Bezugsfläche zu Null gesetzt

## Patentansprüche

1. Lamelle (1) zum Einsatz in eine Vulkanisationsform (2) zur Herstellung eines Fahrzeugreifens (3)
a) mit Erhebungen (4) und Senken (5), wobei die Höhe der Erhebungen (4) und die Tiefe der Senken (5) etwa parallel zur Peripheriefläche (P) der Lauffläche (L) des letztlich herzustellenden Fahrzeugreifens (3) weisen,
b) wobei jeder Erhebung (4) eine punktförmige höchste Stelle - nachfolgend "Gipfel (G)" genannt - zugeordnet ist, und
c) wobei jeder Senke (5) eine punktförmige tiefste Stelle - nachfolgend "Krater (K)" genannt - zugeordnet ist,
f) wobei die Erhebungen (4) und die Senken (5) in einer im wesentlichen gleichmäßigen, flächigen Teilung vorliegen,
g) wobei besagte flächige Teilung durch im wesentlichen gerade Teilungslinien (T) beschrieben ist, deren Höhe/Tiefe (Zt) - vorzugsweise mittig - zwischen der Höhe (Zg) der Gipfel (G) und der Tiefe (Zk) der Krater (K) liegt,
h) wobei diese Teilungslinien (T) in zwei Scharen geordnet sind, wobei die Teilungslinien (T) innerhalb einer jeden Schar parallel zueinander verlaufen und sich die Teilungslinien (L) verschiedener Scharen kreuzen,
**dadurch gekennzeichnet**,
i) dass diese Teilungslinien (T) nicht nur in zwei sondern in drei Scharen geordnet sind,
j) wobei sich die Teilungslinien (T) verschiedener Scharen unter einem Winkel von etwa 60° kreuzen
k) und so ein Gatter aus - etwa gleichseitigen - Dreiecken bilden.

2. Lamelle (1) zum Einsatz in eine Vulkanisationsform (2) zur Herstellung eines Fahrzeugreifens (3)
a) mit Erhebungen (4) und Senken (5), wobei die Höhe der Erhebungen (4) und die Tiefe der Senken (5) etwa parallel zur Peripheriefläche (P) der Lauffläche (L) des letztlich herzustellenden Fahrzeugreifens (3) weisen, wobei entweder
b) jede Erhebung (4) eine linienförmige höchste Stelle - nachfolgend "Bergkamm (BK)" genannt - hat, und
c) jeder Senke (5) eine punktförmige tiefsta Stelle - nachfolgend "Krater (K)" genannt - zugeordnet ist, oder umgekehrt-je nach Blickorientierung-
d) jeder Erhebung (4) eine punktförmige höchste Stelle - nachfolgend "Gipfel (G)" genannt - zugeordnet ist, und
e) jede Senke (5) eine linienförmige tiefste Stelle - nachfolgend "Tal" oder "Schlucht (S)" genannt - hat,
f) wobei die Erhebungen (4) und die Senken (5) in einer im wesentlichen gleichmäßigen, flächigen Teilung vorliegen,
g) wobei besagte flächige Teilung durch im wesentlichen gerade Teilungslinien (T) beschrieben ist, deren Höhe/Tiefe (Zt) auf der Höhe der linienförmigen Extreme [Bergkämme (BK) bzw. Talsohlen (TS)] liegt,
h) wobei diese Teilungslinien (T) in zwei Scharen geordnet sind, wobei die Teilungslinien (T) innerhalb einer jeden Schar parallel zueinander verlaufen und sich die Teilungslinien (L) verschiedener Scharen kreuzen,
**dadurch gekennzeichnet,**
i) dass diese Teilungslinien (T) nicht nur in zwei sondern in drei Scharen geordnet sind,
j) wobei sich die Teilungslinien (T) verschiedener Scharen unter einem Winkel von etwa 60° kreuzen
k) und so ein Gatter aus - etwa gleichseitigen - Dreiecken bilden.

3. Lamelle (1) nach Anspruch 1 oder 2, **dadurch gekennzeichnet, dass** - abgesehen von evt. Kantenverrundungen oder -brechungen - jede Erhebung (4) sich als eine auf einem etwa gleichseitigen Dreieck als Grundfläche aufbauende erhabene Pyramide darstellt.

4. Lamelle (1) nach Anspruch 1 oder 2, **dadurch gekennzeichnet, dass** - abgesehen von evt. Kantenverrundungen oder -brechungen - jede Senke (5) sich als eine auf einem etwa gleichseitigen Dreieck als Grundfläche aufbauende vertiefte Pyramide darstellt.

5. Lamelle (1) nach Anspruch 1, 3 und 4, wobei die Schnittlinie zwischen einer Seitenfläche besagter Pyramide und besagter Grundfläche als "Basislinie (B)" bezeichnet wird, **dadurch gekennzeichnet, dass** alle drei Basislinien (B) aller Pyramiden mittig zwischen der Höhe (Zg) der Gipfel (G) und der Tiefe (Zk) der Krater (K) liegen.

6. Lamelle (1) nach Anspruch 1, 3 und 4, **dadurch gekennzeichnet, dass** parallel zu jeder der drei Basislinien (B) einer dreiecks-pyramidenförmigen Erhebung (4) eine Basislinie (B) einer dreiecks-pyramidenförmigen Senke (5) anschließt und, dass parallel zu jeder der drei Basislinien (B) einer dreiecks-pyramidenförmigen Senke (5) eine Basislinie (B) einer dreiecks-pyramidenförmigen Erhebung (4) anschließt.

7. Lamelle (1), **dadurch gekennzeichnet, dass** sie (1) bereichsweise gemäß der Kombination aus den Merkmalen der Ansprüche 1 und 6 Ausbeulungen zeigt und in den übrigen Bereichen Ausbeulungen gemäß Anspruch 2 zeigt, wobei als eine positive Ausbeulung (Kurzform: +) eine Erhebung (4) und als negative Ausbeulung (Kurzform: "-") eine Senke (5) aufgefasst wird oder umgekehrt, wobei sie (1) aus einer Z=0-Bezugsfläche - die die drei sich gleichmäßig kreuzenden Scharen im wesentlichen gerader Teilungslinien (T) enthält und damit ein Gatter aus etwa gleichseitigen Dreiecken bildet - entlang zumindest einer der Winkelhalbierenden besagter sich kreuzender Teilungslinien (T) herausragende verschieden orientierte Ausbeulungen enthält in einer Orientierungsabfolge die von der Alternierung +-+-+-+- abweicht, bevorzugt gemäß der Kurzform +---+---.

8. Lamelle (1) nach Anspruch 6 oder 7, **dadurch gekennzeichnet, dass** die zueinander parallelen Basislinien (B) aneinander anschließender Pyramiden den Abstand 0 voneinander haben, also zusammenfallen, sodass sie nicht als Körperkanten erscheinen, infolgedessen sie auch mit den Teilungslinien (T) zusammenfallen.

9. Lamelle (1) nach Anspruch 6 oder 7, **dadurch gekennzeichnet, dass** die zueinander parallelen Basislinien (B) aneinander anschließender Pyramiden einen Abstand größer 0 voneinander haben, sodass sie als - ggf. verrundete oder gebrochene - Körperkanten erscheinen, wobei die Breite b der Stegflächen S zwischen parallelen Basislinien benachbarter Pyramiden kleiner ist als 40 % der Kantenlänge der Pyramiden-Grundflächen, vorzugsweise ca. 20 % davon.

10. Lamelle (1) nach Anspruch 9, **dadurch gekennzeichnet, dass** die Breite b der Stegflächen S zwischen parallelen benachbarten Basislinien höchstens das Doppelte der Stegdicke beträgt.

11. Lamelle (1) nach Anspruch 1 oder 2, **dadurch gekennzeichnet, dass** die Z=0-Bezugsfläche nicht eben, sondern zylindermantelartig oder weiter bevorzugt polygonprismenartig gewölbt oder in einer alternierenden Abfolge solcher Wölbungen gewellt ist.

12. Lamelle (1) nach Anspruch 11 mit einer unstetigen, also polygonprismenartigen Wölbung, **dadurch gekennzeichnet, dass** die Knicklinien der Z=0-Bezugsfläche mit zumindest einigen Teilungslinien (T) einer der drei Scharen von Teilungslinien (T) zusammenfallen, wobei diese weiter bevorzugt - bezogen auf den fertigen Reifen - im wesentlichen radial verlaufen.

13. Vulkanisationsform (2) zur Herstellung von Reifen (3), wobei die Form (2) Lamellen (1) aufweist zur Herstellung von Einschnitten (10) in der Lauffläche (L),
**dadurch gekennzeichnet, dass** zumindest einige der Lamellen als Lamellen (1) gemäß Anspruch 1 oder 2 ausgebildet sind, vorzugsweise gemäß zumindest einem der weiteren Ansprüche 3 bis 12.

14. Fahrzeugreifen (3) mit einer Lauffläche (L) mit Einschnitten (10),
**dadurch gekennzeichnet, dass** zumindest einige der Einschnitte (10) mittels Lamellen (1) gemäß Anspruch 1 oder 2 geformt sind, vorzugsweise gemäß zumindest einem der weiteren Ansprüche 3 bis 12.

## Claims

1. Lamella (1) for insertion into a vulcanisation mould (2) to produce a vehicle tyre (3)
a) with protuberances (4) and depressions (5), the height of the protuberances (4) and the depth of the depressions (5) extending substantially parallel to the peripheral face (P) of the tread surface (L) of the vehicle tyre (3) which is finally to be produced,
b) each protuberance (4) having associated therewith a pointed highest point - hereinafter called "peak (G)" - and
c) each depression (5) having associated therewith a pointed lowest point - hereinafter called "crater (K)" -
f) the protuberances (4) and the depressions (5) being in a substantially uniform, areal distribution,
g) said areal distribution being described by substantially straight dividing lines (T), the height/depth (Zt) of which lines lies - preferably centrally - between the height (Zg) of the peak (G) and the depth (Zk) of the crater (K),
h) these dividing lines (T) being disposed in two bands, the dividing lines (T) extending parallel to one another within each band, and the dividing lines (T) of different bands intersecting one another,
**characterised in that**
i) these dividing lines (T) are not only disposed in two bands, but they are disposed in three bands,
j) the dividing lines (T) of different bands intersecting one another at an angle of substantially 60°,
k) and thus forming a lattice formed from - substantially equilateral - triangles.

2. Lamella (1) for insertion into a vulcanisation mould (2) to produce a vehicle tyre (3)
a) with protuberances (4) and depressions (5), the height of the protuberances (4) and the depth of the depressions (5) extending substantially parallel to the peripheral face (P) of the tread surface (L) of the vehicle tyre (3) which is finally to be produced,
either
b) each protuberance (4) having a linear highest point - hereinafter called "crest (BK)" - and
c) each depression (5) having associated therewith a pointed lowest point - hereinafter called "crater (K)" -
or vice versa - depending on the viewing orientation -
d) each protuberance (4) having associated therewith a pointed highest point - hereinafter called "peak (G)" - and
e) each depression (5) having a linear lowest point - hereinafter called "valley" or "gorge (S)" -
f) the protuberances (4) and the depressions (5) being in a substantially uniform, areal distribution,
g) said areal distribution being described by substantially straight dividing lines (T), the height/depth (Zt) of which lines lies at the level of the linear extremes [crests (BK) or respectively valley bottoms (TS)],
h) these dividing lines (T) being disposed in two bands, the dividing lines (T) extending parallel to one another within each band, and the dividing lines (T) of different bands intersecting one another,
**characterised in that**
i) these dividing lines (T) are not only disposed in two bands, but they are disposed in three bands,
j) the dividing lines (T) of different bands intersecting one another at an angle of substantially 60°,
k) and thus forming a lattice formed from - substantially equilateral - triangles.

3. Lamella (1) according to claim 1 or 2, **characterised in that** - apart from any rounded edge portions or chamfered edge portions - each protuberance (4) is represented as a raised pyramid which builds on a substantially equilateral triangle as the basic area.

4. Lamella (1) according to claim 1 or 2, **characterised in that** - apart from any rounded edge portions or chamfered edge portions - each depression (5) is represented as a recessed pyramid which builds on a substantially equilateral triangle as the basic area.

5. Lamella (1) according to claims 1, 3 and 4, the line of intersection between a lateral face of said pyramid and said basic area being called the "base line (B)", **characterised in that** all three base lines (B) of all of the pyramids lie centrally between the height (Zg) of the peak (G) and the depth (Zk) of the crater (K).

6. Lamella (1) according to claims 1, 3 and 4, **characterised in that** a base line (B) of a depression (5), in the shape of a triangular pyramid, is added parallel to each of the three base lines (B) of a protuberance (4), in the shape of a triangular pyramid, and **in that** a base line (B) of a protuberance (4), in the shape of a triangular pyramid, is added parallel to each of the three base lines (B) of a depression (5) in the shape of a triangular pyramid.

7. Lamella (1), **characterised in that** it (1) exhibits bulges in various regions according to the combination of the features of claims 1 and 6 and exhibits bulges in the remaining regions according to claim 2, a protuberance (4) being perceived as a positive bulge (abbreviated form: +), and a depression (5) being perceived as a negative bulge (abbreviated form: "-"), or vice versa, it (1) containing differently orientated bulges, which protrude from a Z=0 reference surface - which contains the three uniformly intersecting bands of substantially straight dividing lines (T) and hence forms a lattice of substantially equilateral triangles - along at least one of the angle bisectors of said intersecting dividing lines (T), in a sequence of orientation which differs from the alternating pattern +-+-+-+-, preferably according to the abbreviated form +---+---.

8. Lamella (1) according to claim 6 or 7, **characterised in that** the base lines (B), which lie parallel to one another, of pyramids which communicate with one another have the spacing 0 from one another, that is to say they coincide, so that they do not appear as body edges and, in consequence, they also coincide with the dividing lines (T).

9. Lamella (1) according to claim 6 or 7, **characterised in that** the base lines (B), which lie parallel to one another, of pyramids which communicate with one another have a spacing greater than 0 from one another, so that they appear as - possibly rounded or chamfered - body edges, the width b of the web faces S between parallel base lines of adjacent pyramids being smaller than 40 % of the edge length of the basic pyramid faces, preferably approx. 20 % thereof.

10. Lamella (1) according to claim 9, **characterised in that** the maximum width b of the web faces S between parallel adjacent base lines is twice the web thickness.

11. Lamella (1) according to claim 1 or 2, **characterised in that** the Z=0 reference surface is not flat, but it is curved in the shape of a cylinder jacket or more preferably in the shape of a polygonal prism, or it is undulatory in an alternating sequence of such curved portions.

12. Lamella (1) according to claim 11, having a non-uniform curved portion, that is to say a curved portion in the shape of a polygonal prism, **characterised in that** the broken lines of the Z=0 reference surface coincide with at least some dividing lines (T) of one of the three bands of dividing lines (T), the latter more preferably extending substantially radially - relative to the finished tyre.

13. Vulcanisation mould (2) for producing tyres (3), the mould (2) having lamellae (1) to produce incisions (10) in the tread surface (L), **characterised in that** at least some of the lamellae are configured as lamellae (1) according to claim 1 or 2, preferably according to at least one of the additional claims 3 to 12.

14. Vehicle tyre (3), having a tread surface (L) with incisions (10) therein, **characterised in that** at least some of the incisions (10) are shaped by means of lamellae (1) according to claim 1 or 2, preferably according to at least one of the additional claims 3 to 12.

## Revendications

1. Lamelle (1) destinée à être insérée dans un moule de vulcanisation (2) servant à la fabrication d'un bandage de véhicule (3), comprenant :
a) des parties en élévation (4) et des parties en creux (5), où la hauteur des parties en élévation (4) et la profondeur des parties en creux (5) se présentent à peu près parallèlement à la surface périphérique (P) de la bande de roulement (L) du bandage de véhicule (3) finalement à fabriquer,
b) où un emplacement le plus élevé en forme de point - appelé ci-après "sommet (G)" - est associé à chaque partie en élévation (4), et
c) où un emplacement le plus profond en forme de point - appelé ci-après "cratère (K)" - est associé à chaque partie en creux (5),
f) où les parties en élévation (4) et les parties en creux (5) se présentent selon une séparation plane pratiquement régulière,
g) où ladite séparation plane est décrite essentiellement par des lignes de séparation (T) droites dont la hauteur / la profondeur (Zt) se trouve entre la hauteur (Zg) des sommets (G) et la profondeur (Zk) des cratères (K), de préférence au milieu,
h) où ces lignes de séparation (T) sont disposées en deux groupes, où les lignes de séparation (T) s'étendent parallèlement entre elles, à l'intérieur de chaque groupe, et où se croisent les lignes de séparation (T) de groupes différents,
caractérisé
i) en ce que ces lignes de séparation (T) ne sont pas disposées seulement en deux groupes mais en trois groupes,
j) où les lignes de séparation (T) de groupes différents se croisent suivant un angle à peu près de 60°
k) et forment ainsi une grille de triangles à peu près équilatéraux.

2. Lamelle (1) destinée à être insérée dans un moule de vulcanisation (2) servant à la fabrication d'un bandage de véhicule (3), comprenant :
a) des parties en élévation (4) et des parties en creux (5), où la hauteur des parties en élévation (4) et la profondeur des parties en creux (5) se présentent à peu près parallèlement à la surface périphérique (P) de la bande de roulement (L) du bandage de véhicule (3) finalement à fabriquer,
où soit
b) chaque partie en élévation (4) a un emplacement le plus élevé en forme de ligne - appelé ci-après "crête de montagne (BK)" -, et
c) un emplacement le plus profond en forme de point - appelé ci-après "cratère (K)" - est associé à chaque partie en creux (5),
soit inversement, en fonction de la direction du regard,
d) un emplacement le plus élevé, en forme de point - appelé ci-après "sommet (G)" - est associé à chaque partie en élévation (4), et
e) un emplacement le plus profond, en forme de ligne - appelé ci-après "vallée" ou "gorge (S)" - est associé à chaque partie en creux (5),
f) où les parties en élévation (4) et les parties en creux (5) se présentent selon une séparation plane, pratiquement régulière,
g) où ladite séparation plane esL décrite essentiellement par des lignes de séparation droites (T) dont la hauteur / la profondeur (Zt) se trouve à la hauteur des extrêmes en forme de lignes [(crêtes de montagne (BK) ou fonds de vallées (TS)],
h) où ces lignes de séparation (T) sont disposées en deux groupes, où les lignes de séparation (T) s'étendent parallèlement entre elles, à l'intérieur de chaque groupe, et où se croisent les lignes de séparation (T) de groupes différents,
caractérisé
i) en ce que ces lignes de séparation (T) ne sont pas disposées seulement en deux groupes mais en trois groupes,
j) où les lignes de séparation (T) de groupes différents se croisent suivant un angle à peu près de 60°
k) et forment ainsi une grille de triangles à peu près équilatéraux.

3. Lamelle (1) selon la revendication 1 ou 2, **caractérisée en ce que**, indépendamment d'éventuelles parties arrondies des arêtes ou d'éventuels chanfreinages des arêtes, chaque partie en élévation (4) se présente comme une pyramide en relief se constituant sur un triangle à peu près équilatéral servant de surface de base.

4. Lamelle (1) selon la revendication 1 ou 7, **caractérisée en ce que**, indépendamment d'éventuelles parties arrondies des arêtes ou d'éventuels chanfreinages des arêtes, chaque partie en creux (5) se présente comme une pyramide creusée se constituant sur un triangle à peu prés équilatéral servant de surface de base.

5. Lamelle (1) selon les revendications 1, 3 et 4, où la ligne de coupe, entre une surface latérale d'une dite pyramide et d'une dite surface de base, est désignée comme une "ligne de base (B)", **caractérisée en ce que** la totalité des trois lignes de base (B) de toutes les pyramides se trouve au milieu, entre la hauteur (Zg) des sommets (G) et la profondeur (2k) des cratères (K).

6. Lamelle (1) selon les revendications 1, 3 et 4, **caractérisée en ce qu'**une ligne de base (B) d'une partie en creux (5) en forme de pyramide et de triangle se raccorde à une partie en élévation (4) en forme de pyramide et de triangle, parallèlement à chacune des trois lignes de base (B), et **en ce qu'**une ligne de base (B) d'une partie en élévation (4) en forme de pyramide et de triangle se raccorde à une partie en creux (5) en forme de pyramide et de triangle, parallèlement à chacune des trois lignes de base (B).

7. Lamelle (1) **caractérisée en ce que** la lamelle (1) présente, par zones, des parties bosselées conformément à la combinaison des caractéristiques des revendications 1 et 6 et présente, dans les autres zones, des parties bosselées conformément à la revendication 2, où est indiquée comme une partie bosselée positive (forme abrégée : "+"), une partie en élévation (4) et comme une partie bosseléee négative (forme abrégée : "-"), une partie en creux (5) ou inversement, où la lamelle (1), à partir d'une surface de référence Z = 0 qui contient les lignes de séparation (T) pratiquement droites, se croisant de façon régulière, et qui constitue ainsi une grille de triangles à peu près équilatéraux, contient des parties bosselées, orientées différemment, le long d'au moins l'une des bissectrices desdites lignes de séparation (T) se croisant, suivant une suite d'orientations qui s'écarte de la forme alternée +-+-+-+-, de préférence conformément à la forme abrégée +---+---.

8. Lamelle (1) selon la revendication 6 ou 7, **caractérisée en ce que** les lignes de base (B), parallèles entre elles, de pyramides adjacentes les unes aux autres, ont un intervalle entre elles égal à 0, donc coïncident, de sorte que les lignes de base n'apparaissent pas comme des arêtes de corps, en conséquence de quoi les lignes de base coïncident également avec les lignes de séparation (T).

9. Lamelle (1) selon la revendication 6 ou 7, **caractérisée en ce que** les lignes de base (B), parallèles entre elles, de pyramides adjacentes les unes aux autres, ont un intervalle entre elles supérieur à 0, de sorte que les lignes de base apparaissent comme des arêtes de corps, éventuellement arrondies ou chanfreinées, où la largeur b des surfaces à nervures S, entre des lignes de base parallèles de pyramides adjacentes, est inférieure à 40 % de la longueur des arêtes des surfaces de base des pyramides, de préférence égale à environ 20 % de cette longueur.

10. Lamelle (1) selon la revendication 9, **caractérisée en ce que** la largeur b des surfaces à nervures S est égale au maximum au double de l'épaisseur des nervures, entre des lignes de base adjacentes parallèles.

11. Lamelle (1) selon la revendication 1 ou 2, **caractérisée en ce que** la surface de référence Z = 0 n'est pas plane mais bombée, en forme de corps de cylindre ou, de façon encore préférée, bombée en forme de prisme polygonal, ou ondulée suivant une succession alternée de telles courbures.

12. Lamelle (1) selon la revendication 11 comprenant une courbure variable, donc en forme de prisme polygonal, **caractérisée en ce que** les lignes de courbures de la surface de référence Z = 0 coïncident avec au moins certaines lignes de séparation (T) de l'une des lignes de séparation (T) des trois groupes, où ces lignes de courbures s'étendent en outre, de façon préférable, pratiquement en direction radiale, par rapport au bandage fini.

13. Moule de vulcanisation (2) pour la fabrication de bandages (3), où le moule (2) comprend des lamelles (1) servant à la fabrication d'entailles (10) dans la bande de roulement (L), **caractérisé en ce qu'**au moins certaines des lamelles sont conformées comme des lamelles (1) selon la revendication 1 ou 2, de préférence selon au moins l'une quelconque des autres revendications 3 à 12.

14. Bandage de véhicule (3) comprenant une bande de roulement (L) dotée d'entailles (10), **caractérisé en ce qu'**au moins certaines des entailles (10) sont formées au moyen de lamelles (1) selon la revendication 1 ou 2, de préférence selon au moins l'une quelconque des autres revendications 3 à 12.
